# EUROPEAN PATENT APPLICATION

(11) **EP 4 851 229 A1**
(43) Date of publication of application: **09.12.2026**
(21) Application number: 25748371.9
(22) Date of filing: 17.01.2025
(51) Int. Cl.: C08J 3/12, C08J 3/09, C08L 81/02

(54) **POLYARYLENE SULFIDE COPOLYMER PARTICLES AND METHOD FOR PRODUCING SAME**

(30) Priority: 30.01.2024 JP 2024011433
(71) Applicant: Toray Industries, Inc., Tokyo 103-8666 (JP)
(72) Inventor: MIYABARA, Yuichiro, Nagoya-shi, Aichi 455-8502 (JP); KAIHO, Shu, Nagoya-shi, Aichi 455-8502 (JP); HORIUCHI, Shunsuke, Nagoya-shi, Aichi 455-8502 (JP)
(74) Representative: Mewburn Ellis LLP
(86) International application number: PCT/JP2025/001393
(87) International publication number: WO 2025/164375

(57) **Abstract**

Polyarylene sulfide copolymer particles, wherein a median particle diameter D50 is 1 µm or more and 1,000 µm or less, wherein a glass transition temperature is 95°C or more and 190°C or less by differential scanning calorimetry, and a sphericity is 80 or more and 100 or less. An object is to obtain polyarylene sulfide copolymer particles having a high glass transition temperature and a high sphericity, and to provide a simple and safe production method thereof.

## Description

### TECHNICAL FIELD

The present invention relates to polyarylene sulfide copolymer particles and a method for producing the same.

### BACKGROUND ART

Polyarylene sulfide typified by polyphenylene sulfide (hereinafter, sometimes abbreviated as PPS) has properties suitable as an engineering plastic, such as excellent heat resistance, barrier property, moldability, chemical resistance, electrical insulation property, and moisture and heat resistance, and is used in various electrical and electronic parts, mechanical parts, automobile parts, films, fibers, and the like, mainly for injection molding and extrusion molding applications. Polyarylene sulfides have been expanding in their applications in recent years due to their excellent properties.

PPS, which is a typical polyarylene sulfide, is generally a crystalline polymer having a glass transition temperature of 80 to 90°C and a melting point of 275 to 285°C, and is often used under high-temperature conditions due to its excellent heat resistance. It is also widely used in applications utilizing excellent chemical resistance.

However, the above-described PPS as a representative example of the polyarylene sulfide has a problem that while it withstands use at a high temperature due to a high melting point, rigidity is rapidly reduced at 80 to 90°C or more, which is a temperature equal to or more than a glass transition temperature, as compared with a temperature equal to or lower than the glass transition temperature. Various studies have been made to improve the glass transition temperature of a polyarylene sulfide, and for example, Patent Documents 1 to 3 disclose a polyarylene sulfide copolymer obtained by reacting a polyarylene sulfide having a reactive functional group with a rigid molecule.

A polyarylene sulfide copolymer having excellent chemical resistance and higher heat resistance is generally used for injection molding, injection compression molding, blow molding, extrusion molding, and the like. By forming the polyarylene sulfide copolymer into particles, the polyarylene sulfide copolymer can be used as a heat resistant additive in the fields of adhesive materials, paints, and polymer compounds, or as a raw material for three-dimensional fabrication by a powder bed fusion method, and there is an expectation that it can be utilized in a wider range of applications. In addition, also when a resin composition is produced by blending a polyarylene sulfide copolymer with a component selected from a filler and other additives, there is an expectation that a more uniform resin composition can be efficiently obtained by using the polyarylene sulfide copolymer in a particle shape.

Various methods for producing thermoplastic resin particles have been studied. For example, Patent Documents 4 and 5 disclose PPS or polyarylene sulfide particles obtained by dissolving and precipitating PPS or polyarylene sulfide in a solvent, Patent Document 6 discloses a polyarylene sulfide resin powder obtained by subjecting polyarylene sulfide to a dry pulverization treatment, and Patent Documents 7 and 8 disclose PPS particles obtained by adding another thermoplastic polymer to PPS, melt-kneading the mixture, and removing the other thermoplastic polymer.

### PRIOR ART DOCUMENTS

### PATENT DOCUMENTS

Patent Document 1: International Publication No. 2019/151288
Patent Document 2: International Publication No. 2022/045105
Patent Document 3: International Publication No. 2021/020334
Patent Document 4: Japanese Patent Laid-open Publication No. 2008-231250
Patent Document 5: International Publication No. 2009/119466
Patent Document 6: International Publication No. 2019/203256
Patent Document 7: Japanese Patent Laid-open Publication No. 2014-43522
Patent Document 8: Japanese Patent Laid-open Publication No. 10-273594

### SUMMARY OF THE INVENTION

### PROBLEMS TO BE SOLVED BY THE INVENTION

The polyarylene sulfide copolymers disclosed in Patent Documents 1 to 3 have a high glass transition temperature, but the polyarylene sulfide copolymer is produced only by heating in a molten state in the absence of a solvent, and polyarylene sulfide copolymer particles have not been obtained. In addition, there is a description on production of a polyarylene sulfide copolymer in the presence of a solvent, but there is no description on particles or a specific production method. Patent Document 3 describes, as a method for producing a fiber-reinforced polyarylene sulfide copolymer composite base material, a method using a powdery polyarylene sulfide copolymer, but there is no description on a specific method for obtaining a powdery polyarylene sulfide copolymer or a method for producing a composite base material using a powdery polyarylene sulfide copolymer.

The PPS or polyarylene sulfide particles disclosed in Patent Documents 4 and 5 are produced by dissolving PPS or polyarylene sulfide in a solvent and precipitating the PPS or polyarylene sulfide. When this production method is applied to a polyarylene sulfide copolymer having a high glass transition temperature, there has been found a problem that the yield of particles and the molecular weight of the polyarylene sulfide copolymer decrease due to difference in solubility.

Patent Document 6 discloses a polyarylene sulfide resin powder for thermoplastic prepreg, but a specific method for producing the powder is only dry pulverization. Generally, the resin powder obtained by dry pulverization has characteristics of low sphericity and poor fluidity and dispersibility because it is irregularly shaped. In addition, similarly to the inventions described in Patent Documents 1 to 3, since the resin is a pellet-like or lump-like resin produced by heating in a molten state, there is also a problem that it is difficult to form particles by dry pulverization.

In Patent Documents 7 and 8, PPS particles are obtained, but a thermoplastic polymer other than PPS is added, so that a long-time reaction is required for decomposition for removing the thermoplastic polymer, and there is a problem that an operator is exposed to a solvent.

An object of the present invention is to provide polyarylene sulfide copolymer particles that make it possible to obtain a three-dimensional object having a high fabricated object density and excellent surface quality, a fiber-reinforced composite base material excellent in mechanical properties, and a molded article formed therefrom.

Another object of the present invention is to provide a simple and safe production method for obtaining polyarylene sulfide copolymer particles having a high glass transition temperature and a high sphericity.

### SOLUTIONS TO THE PROBLEMS

The present invention has been achieved for at least partially solving the above-described problems, and can be achieved by providing the following contents.
1. Polyarylene sulfide copolymer particles, wherein a median particle diameter D50 is 1 µm or more and 1,000 µm or less, wherein a glass transition temperature is 95°C or more and 190°C or less when measured using a differential scanning calorimeter, and wherein a sphericity is 80 or more and 100 or less.
2. The polyarylene sulfide copolymer particles according to 1 above, wherein the median particle diameter D50 is 1 µm or more and 150 µm or less.
3. The polyarylene sulfide copolymer particles according to 1 or 2 above, wherein a weight average molecular weight Mw is 30,000 or more.
4. The polyarylene sulfide copolymer particles according to any one of 1 to 3 above, wherein the polyarylene sulfide copolymer constituting the polyarylene sulfide copolymer particles contains at least one linking group selected from a sulfonyl group, a sulfinyl group, an ester group, an amide group, an imide group, an ether group, a urea group, a urethane group, and a siloxane group.
5. A method for producing polyarylene sulfide copolymer particles, the method comprising: step 1 of melt-kneading a polyarylene sulfide copolymer and a water-soluble thermoplastic resin, wherein the polyarylene sulfide copolymer has a glass transition temperature of 95°C or more and 190°C or less when measured using a differential scanning calorimeter; and step 2 of removing the water-soluble thermoplastic resin by washing with water or alcohols.
6. The method for producing polyarylene sulfide copolymer particles according to 5 above, wherein a viscosity ratio ηa/ηb of a melt viscosity (ηa) of the polyarylene sulfide copolymer to a melt viscosity (ηb) of the water-soluble thermoplastic resin is 0.1 or more and 1000 or less.
7. A dispersion in which the polyarylene sulfide copolymer particles according to any one of 1 to 4 above are dispersed in a liquid.
8. A three-dimensional object formed from the polyarylene sulfide copolymer particles according to any one of 1 to 4 above.
9. A method for producing a fiber-reinforced composite base material, comprising: a step of dispersing the polyarylene sulfide copolymer particles according to any one of 1 to 4 above in a reinforcing fiber; and a step of melting the polyarylene sulfide copolymer particles to impregnate the reinforcing fiber.
10. A fiber-reinforced composite base material produced by the method for producing a fiber-reinforced composite base material according to 9 above.
11. A molded article formed from the fiber-reinforced composite base material according to 10 above.
12. The molded article according to 11 above, which is an aircraft structural member.

### EFFECTS OF THE INVENTION

According to the present invention, it is possible to provide polyarylene sulfide copolymer particles having a high glass transition temperature and a high sphericity, and a simple and safe production method thereof.

By using the polyarylene sulfide copolymer particles of the present invention, a three-dimensional object having a high fabricated object density and excellent surface quality can be obtained. In addition, the polyarylene sulfide copolymer particles of the present invention are excellent in dispersibility when dispersed in reinforcing fibers, and can provide a fiber-reinforced composite base material excellent in mechanical properties, and a molded article formed of the fiber-reinforced composite base material.

### EMBODIMENTS OF THE INVENTION

Hereinafter, embodiments of the present invention will be described in detail.

### [Polyarylene sulfide copolymer particles]

The lower limit of the glass transition temperature of the polyarylene sulfide copolymer particles is 95°C or more, preferably 100°C or more, and more preferably 110°C or more. When the glass transition temperature is lower than 95°C, high rigidity cannot be obtained under high-temperature conditions. The upper limit of the glass transition temperature is 190°C or less, preferably 180°C or less, and more preferably 160°C or less. When the glass transition temperature exceeds 190°C, the chemical resistance of the molded article is insufficient. The glass transition temperature is defined as an inflection point of a baseline shift detected when the polyarylene sulfide copolymer particles are heated from 0°C to 340°C at a rate of 20°C/min using a differential scanning calorimeter.

In order to obtain the polyarylene sulfide copolymer particles having a glass transition temperature in the above range, for example, the molecular structure of the polyarylene sulfide copolymer constituting the polyarylene sulfide copolymer particles may contain a rigid linking group such as a sulfonyl group, a sulfinyl group, an ester group, an amide group, an imide group, an ether group, a urea group, a urethane group, and a siloxane group.

The crystallization temperature of the polyarylene sulfide copolymer particles is preferably 150°C or more, more preferably 160°C or more, still more preferably 170°C or more. When the lower limit of the crystallization temperature is within the above range, crystallization tends to easily occur during molding processing or when a component selected from a filler and other additives is blended to produce the resin composition, and mechanical properties and chemical resistance are excellent, and productivity tends to be improved. The upper limit of the crystallization temperature is not particularly limited, but in general, a range of 235°C or less can be exemplified. The crystallization temperature is a value of a crystallization peak temperature detected when the polyarylene sulfide copolymer particles are heated from 0°C to 340°C at a rate of 20°C/min, held at 340°C for 1 minute, and then cooled to 100°C at a rate of 20°C/min using a differential scanning calorimeter.

The polyarylene sulfide copolymer particles preferably have a melting point of 300°C or less, more preferably 270°C or less, and still more preferably 260°C or less. When the upper limit of the melting point is within the above range, melt molding processing is facilitated. In addition, it preferably has a melting point of 200°C or more, and more preferably 220°C or more. When the lower limit of the melting point is within the above range, sufficient heat resistance can be obtained when a three-dimensional object, a fiber-reinforced composite base material, and a molded article formed therefrom are obtained, which is preferable. The melting point is a value of a melting peak temperature detected when polyarylene sulfide copolymer particles are heated from 0°C to 340°C at a rate of 20°C/min using a differential scanning calorimeter, then held at 340°C for 1 minute, cooled to 100°C at a rate of 20°C/min, then held at 100°C for 1 minute, and again heated to 340°C at a rate of 20°C/min.

The polyarylene sulfide copolymer that forms the polyarylene sulfide copolymer particles is a copolymer containing 70 mol% or more, preferably 80 mol% or more of an arylene sulfide unit. Here, the arylene sulfide unit is a repeating unit represented by the formula -(Ar-S)-. Examples of Ar include units selected from units represented by the following formulas (I) to (XI), etc. Among them, the unit represented by formula (I) is particularly preferable.

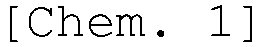

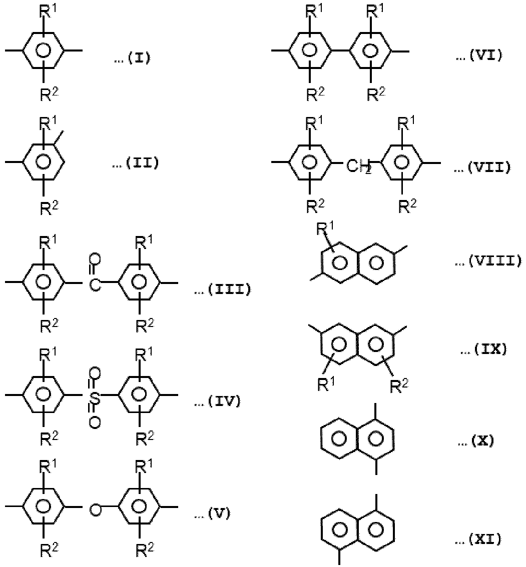

R¹ and R² are substituents selected from hydrogen, an alkyl group having 1 to 12 carbon atoms, an alkoxy group having 1 to 12 carbon atoms, an aryl group having 6 to 24 carbon atoms, a halogen group, and a reactive functional group, and R¹ and R² may be the same or different.

As long as the above repeating unit is contained within the above range, a branching unit or a cross-linking unit represented by the following formulas (XII) to (XIV) or the like can be further included as a small amount of unit. The copolymerization amount of these branching units or cross-linking units is preferably in the range of 0 to 1 mol% with respect to 1 mol of the unit of -(Ar-S)-.

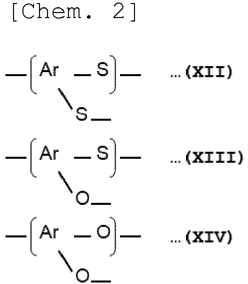

Here, Ar is a unit selected from the units represented by the above formulas (I) to (XI).

The arylene sulfide unit may be any of a random copolymer, a block copolymer, and a mixture thereof including the above repeating unit.

Typical examples thereof include polyphenylene sulfide, polyphenylene sulfide sulfone, polyphenylene sulfide ketone, random copolymers thereof, block copolymers thereof, and mixtures thereof. A particularly preferable polyarylene sulfide includes a polyphenylene sulfide containing a p-phenylene sulfide unit represented by the following formula (XV) as a main constituent unit of a polymer 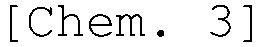 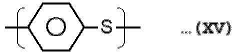 in an amount of 80 mol% or more, particularly 90 mol% or more.

The lower limit of the number average molecular weight Mn of the arylene sulfide unit in the polyarylene sulfide copolymer that forms the polyarylene sulfide copolymer particles is preferably 1,000 or more, more preferably 1,500 or more, still more preferably 2,000 or more. When the number average molecular weight of the arylene sulfide unit is within the above range, high chemical resistance tends to be obtained. The upper limit of the number average molecular weight of the arylene sulfide unit is preferably 10,000 or less, more preferably 6,000 or less, still more preferably 4,000 or less. When the number average molecular weight of the arylene sulfide unit is within the above range, high heat resistance tends to be obtained.

Here, the number average molecular weight of the arylene sulfide unit in the polyarylene sulfide copolymer refers to the number average molecular weight of a portion derived from the polyarylene sulfide (A) described later in the polyarylene sulfide copolymer. The number average molecular weight of the arylene sulfide unit in the polyarylene sulfide copolymer can be determined by measuring the molecular weight of a residue (corresponding to the arylene sulfide unit) obtained by decomposing the linking group of the polyarylene sulfide copolymer by the method described later. As a method for decomposing the linking group, a known method according to the type of the linking group can be employed. For example, when the linking group is an imide group, a method of decomposing polyimide can be employed. A linking group can be decomposed by a method described in Japanese Patent Laid-open Publication No. 2006-124530 in which a polyarylene sulfide copolymer is treated in an aqueous solution of sodium hydroxide, or a method described in Japanese Patent Laid-open Publication No. 2001-163973 in which a polyarylene sulfide copolymer is allowed to coexist with water or alcohol and reacted at a high temperature and a high pressure of 110°C or more and 1 MPa or more.

In order to set the number average molecular weight of the arylene sulfide unit in the polyarylene sulfide copolymer within the above range, it is preferable to use a polyarylene sulfide (A) having a number average molecular weight Mn of 1,000 or more and 10,000 or less, which will be described later, in the production of the polyarylene sulfide copolymer. The weight average molecular weight and the number average molecular weight can be determined using, for example, SEC (size exclusion chromatography) equipped with a differential refractive index detector.

The polyarylene sulfide copolymer that forms the polyarylene sulfide copolymer particles includes a structure derived from a copolymerization component in addition to the arylene sulfide unit. Examples of the structure derived from the copolymerization component included in the polyarylene sulfide copolymer include a structure including an aromatic ring. The structure is preferably selected from the structures represented by the formulas (a) to (s), more preferably selected from the structures represented by the formulas (a) to (e), (i) and (j), and particularly preferably the structure represented by the formula (i). By including these structures, sufficient mechanical properties, chemical resistance, and rigidity at high temperature tend to be exhibited.

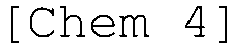

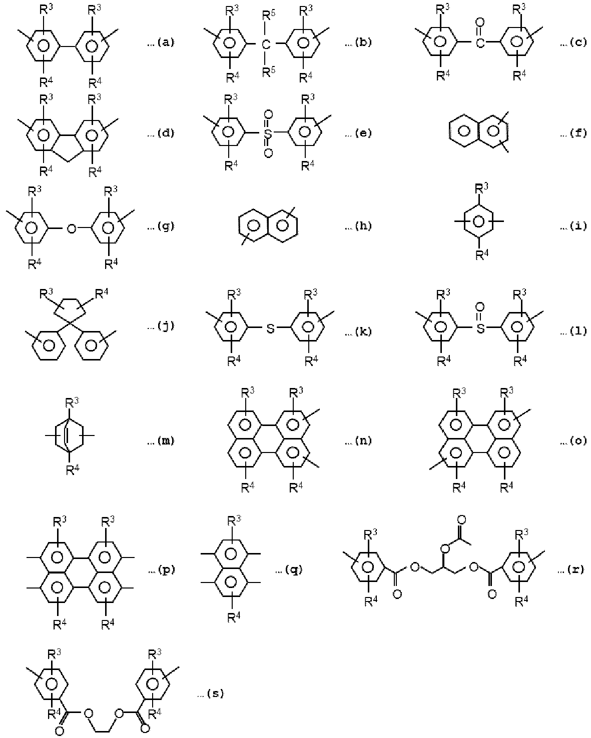

Here, R³, R⁴, and R⁵ are substituents selected from hydrogen, an alkyl group having 1 to 12 carbon atoms, an arylene group having 6 to 24 carbon atoms, and a halogen group, and R³, R⁴, and R⁵ may be the same or different.

The arylene sulfide unit and the copolymerization component in the polyarylene sulfide copolymer forming the polyarylene sulfide copolymer particles may be linked via a structure other than each repeating unit, or terminal groups derived from repeating units may be directly linked. The arylene sulfide unit and the copolymerization component are preferably linked by at least one linking group selected from a sulfonyl group, a sulfinyl group, an ester group, an amide group, an imide group, an ether group, a urea group, a urethane group, and a siloxane group. Among them, it is more preferable to be linked by an imide group. By being linked by an imide group, higher rigidity tends to be exhibited at a high temperature.

The lower limit of the amount of the linking group linking the arylene sulfide unit and the copolymerization component is preferably 1 mol% or more, more preferably 2 mol% or more, still more preferably 4 mol% or more with respect to sulfur atoms included in the polyarylene sulfide copolymer. By setting the amount of the linking group within the above range, reduction in rigidity under high-temperature conditions tends to be sufficiently suppressed. The upper limit of the amount of the linking group is preferably 60 mol% or less, more preferably 40 mol% or less, still more preferably 30 mol% or less, even more preferably 20 mol% or less. When the amount of the linking group increases, the chemical resistance tends to decrease, but when the amount of the linking group is in the above range, sufficient mechanical properties and chemical resistance tend to be exhibited. The amount of the linking group can be determined by calculation using the functional group content contained in the polyarylene sulfide (A) described later and the functional group content contained in the compound (B) used for production of the polyarylene sulfide copolymer, or can be determined by measurement using an FT-IR spectrum or an NMR spectrum of the polyarylene sulfide copolymer particles.

The lower limit of the weight average molecular weight of the polyarylene sulfide copolymer included in the polyarylene sulfide copolymer particles is preferably 30,000 or more, more preferably 40,000 or more, still more preferably 50,000 or more. When the weight average molecular weight is less than 30,000, the mechanical properties of the polyarylene sulfide copolymer particles tend to be deteriorated. The upper limit of the weight average molecular weight is not particularly limited, but can be preferably 200,000 or less, more preferably 150,000 or less, still more preferably 100,000 or less. When the upper limit of the weight average molecular weight is within the above range, the moldability of the polyarylene sulfide copolymer particles tends to be excellent. The weight average molecular weight can be determined using, for example, SEC (size exclusion chromatography) using a differential refractive index detector.

The lower limit of the median particle diameter D50 of the polyarylene sulfide copolymer particles is 1 µm or more. When D50 is less than 1 µm, the bulk density becomes small, and the handleability is deteriorated, or since the particles are fine, for example, it easily adheres to a recoater in three-dimensional fabrication, and the handleability is deteriorated. The upper limit of D50 is 1000 µm. D50 is preferably 150 µm or less, more preferably 100 µm or less, still more preferably 70 µm or less, and most preferably 50 µm or less. When D50 is more than 1000 µm, the particle size becomes equal to or more than the lamination height in three-dimensional fabrication, so that the surface becomes rough, and when a resin composition is produced by blending a filler and/or other additives, a homogeneous resin composition may not be obtained. D50 is preferably 150 µm or less from the viewpoint of obtaining a molded article having a smooth surface in three-dimensional fabrication and obtaining a homogeneous resin composition in the case of producing a resin composition. The median particle diameter D50 is a particle diameter at which a cumulative frequency from a small particle diameter side of a particle size distribution measured by a laser diffraction type particle diameter distribution meter is 50%. The polyarylene sulfide copolymer particles having a median particle diameter D50 of 1000 µm or less can be produced by a production method described later. The median particle diameter D50 can be adjusted by, for example, the type of solvent in which the polyarylene sulfide copolymer is dissolved, the ratio between the polyarylene sulfide copolymer and the solvent, the cooling rate when the polyarylene sulfide copolymer is precipitated, stirring, and the like.

The particle size distribution of the polyarylene sulfide copolymer particles is preferably 10 or less, more preferably 7 or less, still more preferably 5 or less, even more preferably 4 or less, and even more preferably 3 or less. The particle size distribution is represented by D90/D10, which is a ratio of D90 to D10 measured by a laser diffraction type particle diameter distribution meter. The lower limit value of D90/D10 is theoretically 1.0. When the upper limit of D90/D10 is within the above range, there is a tendency that a difference in meltability due to a difference in particle size is reduced in three-dimensional fabrication and resin composition production, and a homogeneous shaped object or resin composition can be obtained. D90/D10 is a value obtained by dividing the particle diameter (D90) at which the cumulative frequency from the small particle diameter side in the particle size distribution measured with the laser diffraction type particle diameter distribution meter is 90% by the particle diameter (D10) at which the cumulative frequency from the small particle diameter side is 10%. The polyarylene sulfide copolymer particles having a D90/D10 within the above range can be produced by a production method described later. In addition, D90/D10 can be adjusted by, for example, a cooling rate when the polyarylene sulfide copolymer particles are precipitated, stirring, or the like.

The sphericity indicating the degree of true sphericity of the polyarylene sulfide copolymer particles is 80 or more, and more preferably 90 or more. When the sphericity is less than 80, sufficient fluidity is not obtained in three-dimensional fabrication, and the surface tends to be rough. In addition, when a resin composition is produced by blending a filler and/or other additives, it tends to be difficult to obtain a homogeneous resin composition. When the polyarylene sulfide copolymer particles are used as a dispersion, the viscosity of the dispersion tends to increase, leading to deterioration of handleability. The upper limit of the sphericity is theoretically 100, and may be in the range of 100 or less. The upper limit of the sphericity is preferably 99 or less. The sphericity is calculated according to the following mathematical formula by randomly observing the minor axis diameter and major axis diameter of 30 particles in an optical microscope photograph of the polyarylene sulfide copolymer particles. [Mathematical Formula 1] $S = \frac{{\sum }_{i = 1}^{n} \left({b}_{i}/{a}_{i}\right)}{n} \times 100$

In the mathematical formula, S is the sphericity, n is the number of measurements, aᵢ is the major axis diameter of the i-th particle, and bᵢ is the minor axis diameter of the i-th particle. The number of measurements n is 30. The polyarylene sulfide copolymer particles having a sphericity in the above range can be produced by a production method described later.

The smoothness of the surface of the polyarylene sulfide copolymer particles and the internal solidity can be expressed by the BET specific surface area by gas adsorption. When the surface of the resin particle is smooth and the inside of the particle is solid, the surface area of the particle is reduced, the fluidity is improved, and the surface of the obtained shaped object is smooth, which is preferable. Here, the smaller the BET specific surface area, the smoother the surface. Specifically, the BET specific surface area is preferably 10 m²/g or less, more preferably 5 m²/g or less, still more preferably 3 m²/g or less, particularly preferably 1m²/g or less, and most preferably 0. 5m²/g or less. The lower limit value is theoretically 0.05 m²/g when the particle diameter is 100 µm.

The BET specific surface area can be measured according to Japanese Industrial Standard (JIS Standard) JIS R 1626 (1996) "Measuring methods for the specific surface area by gas adsorption using the BET method".

The solidity of the polyarylene sulfide copolymer particles can be evaluated by the ratio of the BET specific surface area to the theoretical specific surface area. The closer the ratio of the BET specific surface area to the theoretical specific surface area is to 1, the smoother the surface and the solid particles are. The above ratio is preferably 5 or less, more preferably 4 or less, still more preferably 3 or less, and most preferably 2 or less. The lower limit thereof is theoretically 1. When the ratio of the BET specific surface area to the theoretical specific surface area is within the above range, generation of voids can be suppressed when the polyarylene sulfide copolymer particles are used for molding a composite material, and excellent mechanical properties are exhibited, which is preferable. Furthermore, when used as a raw material for three-dimensional fabrication in a powder bed fusion method, generation of voids generated inside and outside the three-dimensional object is suppressed, and excellent appearance and mechanical properties are exhibited, which is preferable. Assuming that the polyarylene sulfide copolymer particles are completely spherical, the surface area and weight of a single sphere are calculated from the D50 particle diameter and density of the polyarylene sulfide copolymer particles, and the theoretical specific surface area can be expressed by the ratio of the surface area to the weight.

The polyarylene sulfide copolymer particles of the present invention preferably have a small amount of organic gas generated during heating and melting. The polyarylene sulfide copolymer particles of the present invention can be used to obtain a three-dimensional object by lamination and melting, or can be dispersed and melt-impregnated in reinforcing fibers to obtain a fiber-reinforced composite base material excellent in mechanical properties, and a molded article formed therefrom. Both the steps include a step of heating and melting the polyarylene sulfide copolymer particles, and it is preferable that the amount of organic gas is small from the viewpoint of preventing voids from being mixed in the three-dimensional object/fiber-reinforced composite base material and the molded article formed therefrom and from the viewpoint of ensuring the safety of the operator. From the above viewpoint, it is preferable that the polyarylene sulfide copolymer particles of the present invention are finally washed with water and then dried.

### [Method for producing polyarylene sulfide copolymer]

The polyarylene sulfide copolymer to be used in the present invention is preferably produced by a method of heating a polyarylene sulfide (A) having a number average molecular weight Mn of 1,000 or more and 10,000 or less and at least one compound (B) (Hereinafter, it may be abbreviated as the compound (B).) selected from the formulas (a') to (u').

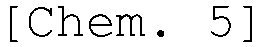

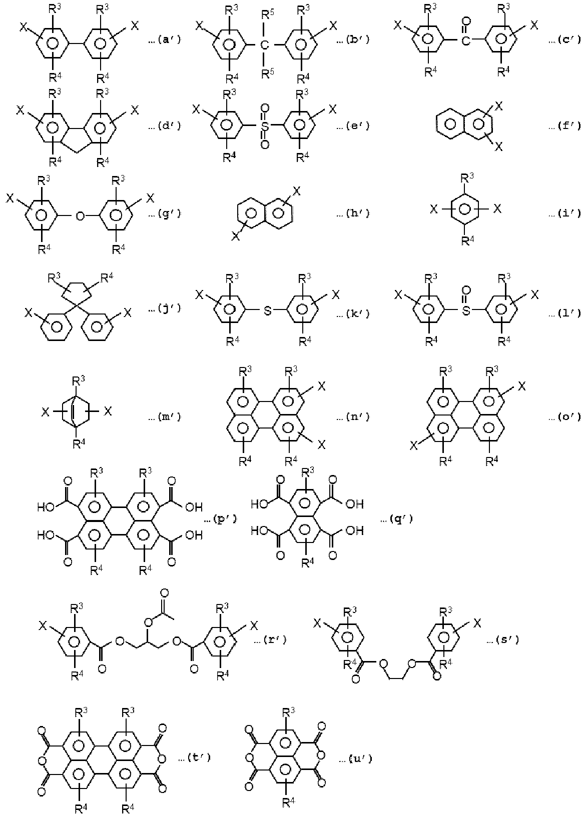

Here, X is at least one group selected from two carboxyl groups respectively bonded to two adjacent carbon atoms or an acid anhydride group derived from the two carboxyl groups, an amino group, a hydroxyl group, a carboxyl group, a silanol group, a sulfonic acid group, an acetamide group, a sulfonamide group, a cyano group, an isocyanate group, an aldehyde group, an acetyl group, an epoxy group, and an alkoxysilyl group. R3^{,} R⁴, and R⁵ are each a substituent selected from hydrogen, an alkyl group having 1 to 12 carbon atoms, an arylene group having 6 to 24 carbon atoms, and a halogen group, and R³, R⁴, and R⁵ may be the same or different.

### [Polyarylene sulfide (A)]

The polyarylene sulfide (A) is a homopolymer or copolymer having a repeating unit represented by the formula -(Ar-S)- as a main constituent unit. Here, the term "main constituent unit" means that the repeating unit is contained in an amount of 70 mol% or more. Examples of Ar include units represented by the formulas (I) to (XI) and the like, and among them, the unit represented by formula (I) is particularly preferable.

As long as the above repeating unit is contained within the above range, a branching unit or a cross-linking unit represented by the following formulas (XII) to (XIV) or the like can be further included as a small amount of unit. The copolymerization amount of these branching units or cross-linking units is preferably in the range of 0 to 1 mol% with respect to 1 mol of the unit of -(Ar-S)-.

The polyarylene sulfide (A) may be any of a random copolymer, a block copolymer, and a mixture thereof including the above repeating unit.

Typical examples thereof include polyphenylene sulfide, polyphenylene sulfide sulfone, polyphenylene sulfide ketone, random copolymers thereof, block copolymers thereof, and mixtures thereof. Particularly preferred examples of the polyarylene sulfide include polyphenylene sulfide containing the p-phenylene sulfide unit represented by the formula (XV) as a main constituent unit of a polymer in an amount of preferably 80 mol% or more, particularly preferably 90 mol% or more.

The polyarylene sulfide (A) contains, as a functional group, at least one functional group selected from two carboxyl groups respectively bonded to two adjacent carbon atoms or an acid anhydride group derived from the two carboxyl groups, an amino group, a hydroxyl group, a carboxyl group, a silanol group, a sulfonic acid group, an acetamide group, a sulfonamide group, a cyano group, an isocyanate group, an aldehyde group, an acetyl group, an epoxy group, and an alkoxysilyl group. From the viewpoint of reactivity when the polyarylene sulfide (A) and the compound (B) described later are heated to produce a polyarylene sulfide copolymer, the polyarylene sulfide (A) preferably contains, as a functional group, at least one functional group selected from an amino group, two carboxyl groups respectively bonded to two adjacent carbon atoms, and an acid anhydride group derived from the two carboxyl groups. Furthermore, since the combination of the functional group of the polyarylene sulfide (A) and the functional group of the compound (B) is more preferably a combination of an amino group and an acid anhydride group from the viewpoint of reactivity, the polyarylene sulfide (A) more preferably contains an amino group and/or an acid anhydride group. In particular, from the viewpoint of ease of polymerization reaction when the polyarylene sulfide (A) is produced by the production method described later, the functional group of the polyarylene sulfide (A) is preferably an amino group, and accordingly, the functional group of the compound (B) is preferably an acid anhydride group. The position of the functional group of the polyarylene sulfide (A) may be in the main chain of the polyarylene sulfide or at the terminal of the polyarylene sulfide, but is preferably introduced at the terminal because the reaction with another polymer or compound having a functional group is easily controlled, and is also preferable from the viewpoint of performing a copolymerization reaction with the compound (B) as described later. When a functional group is introduced into the terminal, the functional group is preferably in the p-position with respect to S bonded to Ar. In addition, a polyarylene sulfide having a functional group bonded to the above Ar can also be exemplified as a preferable form. The above functional group is a structure derived from a compound (C) described later, and details thereof will be described later.

The lower limit of the functional group content contained in the polyarylene sulfide (A) is preferably 400 µmol/g or more, more preferably 500 µmol/g or more, and still more preferably 700 µmol/g or more. When the functional group content is the above lower limit or more, the glass transition temperature of the resulting polyarylene sulfide copolymer tends to be sufficiently high. The upper limit of the functional group content is preferably 5,000 µmol/g or less, more preferably 4,000 µmol/g or less, still more preferably 3,000 µmol/g or less. When the functional group content is equal to or less than the above upper limit value, it tends to be possible to prevent the chemical resistance of the polyarylene sulfide copolymer from deteriorating when the polyarylene sulfide copolymer described later is produced. When the functional group is two carboxyl groups respectively bonded to two adjacent carbon atoms, the above functional group refers to the amount of acid anhydride groups generated from two carboxyl groups respectively bonded to two adjacent carbon atoms. The functional group in the polyarylene sulfide can be quantified by FT-IR analysis of the polyarylene sulfide, for example, by comparing the intensity of absorption at 3382 cm⁻¹ derived from an amino group with the intensity of absorption at 1901 m⁻¹ derived from a benzene ring, the intensity of absorption at 1860 cm⁻¹ derived from an acid anhydride group with the intensity of absorption at 1901 m⁻¹ derived from a benzene ring, and the like.

The number average molecular weight of the polyarylene sulfide (A) is preferably 1,000 or more, more preferably 2,000 or more. When the number average molecular weight of the polyarylene sulfide (A) is 1,000 or more, the chemical resistance of the resulting polyarylene sulfide copolymer is enhanced. The upper limit of the number average molecular weight of the polyarylene sulfide (A) is preferably 10,000 or less, more preferably 6,000 or less, still more preferably 4,000 or less. When the number average molecular weight of the polyarylene sulfide is 10,000 or less, the heat resistance of the resulting polyarylene sulfide copolymer is enhanced. The number average molecular weight is a value calculated in terms of polystyrene by gel permeation chromatography (GPC), which is a type of size exclusion chromatography (SEC).

Hereinafter, a method for producing the polyarylene sulfide (A) will be specifically described, but the method is not limited to the following method. In the present invention, a method for producing a polyarylene sulfide is preferable in which at least a dihalogenated aromatic compound, an inorganic sulfurizing agent and a compound (C) are reacted in an organic polar solvent in the presence of an alkali metal hydroxide, and the compound (C) is present in a range of 0.04 mol or more and 0.5 mol or less with respect to 1 mol of the inorganic sulfurizing agent in a reaction vessel. The compound (C) will be described later. In addition, in the case of selecting two carboxyl groups respectively bonded to two adjacent carbon atoms or an acid anhydride group derived from the two carboxyl groups as the functional group contained in the polyarylene sulfide (A), it is also effective, from the viewpoint of reactivity of the monohalogenated compound, that is, ease of introduction of the functional group into the polyarylene sulfide (A), to adopt a known method for producing a polyarylene sulfide in which at least a dihalogenated aromatic compound, an inorganic sulfurizing agent, and a monohalogenated compound are reacted in an organic polar solvent in the presence of an alkali metal hydroxide. Examples of the monohalogenated compound used here include 3-chlorophthalic acid and 4-chlorophthalic acid.

### [Inorganic sulfurizing agent]

The inorganic sulfurizing agent used in the method for producing a polyarylene sulfide (A) may be any inorganic sulfurizing agent as long as a sulfide bond can be introduced into a dihalogenated aromatic compound, and examples thereof include an alkali metal sulfide, an alkali metal hydrosulfide, and hydrogen sulfide.

Specific examples of the alkali metal sulfide include lithium sulfide, sodium sulfide, potassium sulfide, rubidium sulfide, cesium sulfide, and a mixture of two or more kinds thereof. Among them, lithium sulfide and/or sodium sulfide is preferable, and sodium sulfide is more preferably used. Each of these alkali metal sulfides can be used in the form of a hydrate or an aqueous mixture, or an anhydrous form. It is to be noted that the aqueous mixture refers to an aqueous solution, a mixture of an aqueous solution and a solid component, or a mixture of water and a solid component. Since inexpensive alkali metal sulfides that can be generally obtained are hydrates or aqueous mixtures, it is preferable to use alkali metal sulfides in such forms.

Specific examples of the alkali metal hydrosulfide include lithium hydrogen sulfide, sodium hydrogen sulfide, potassium hydrogen sulfide, rubidium hydrogen sulfide, cesium hydrogen sulfide, and a mixture of two or more kinds thereof. Among them, lithium hydrogen sulfide and/or sodium hydrogen sulfide is preferable, and sodium hydrogen sulfide is more preferably used.

In addition, an alkali metal sulfide prepared in a reaction system from an alkali metal hydrosulfide and an alkali metal hydroxide can also be used. In addition, an alkali metal sulfide prepared by contacting an alkali metal hydrosulfide with an alkali metal hydroxide in advance can also be used. Such alkali metal hydrosulfide and alkali metal hydroxide can be used as hydrates or aqueous mixtures or in the anhydrous forms. Hydrates or aqueous mixtures are preferred from the viewpoint of availability and cost.

Furthermore, an alkali metal sulfide prepared in a reaction system from an alkali metal hydroxide such as lithium hydroxide or sodium hydroxide and hydrogen sulfide can also be used. In addition, an alkali metal sulfide prepared in advance by bringing an alkali metal hydroxide such as lithium hydroxide or sodium hydroxide into contact with hydrogen sulfide can also be used. Hydrogen sulfide can be used without any problem in any form of a gaseous state, a liquid state, and an aqueous solution state.

### [Compound (C)]

The compound (C) used in the method for producing a polyarylene sulfide (A) is a compound having at least one aromatic ring and having, on the one aromatic ring, at least one functional group selected from two carboxyl groups respectively bonded to two adjacent carbon atoms or an acid anhydride group derived from the two carboxyl groups, an amino group, a hydroxyl group, a carboxyl group, a silanol group, a sulfonic acid group, an acetamide group, a sulfonamide group, a cyano group, an isocyanate group, an aldehyde group, an acetyl group, an epoxy group, and an alkoxysilyl group, and at least one functional group selected from a hydroxyl group, a salt of a hydroxyl group, a thiol group, and a salt of a thiol group. At least one functional group selected from two carboxyl groups respectively bonded to two adjacent carbon atoms or an acid anhydride group derived from the two carboxyl groups, an amino group, a hydroxyl group, a carboxyl group, a silanol group, a sulfonic acid group, an acetamide group, a sulfonamide group, a cyano group, an isocyanate group, an aldehyde group, an acetyl group, an epoxy group, and an alkoxysilyl group is introduced into the polyarylene sulfide (A) as a functional group in the polymerization step. At least one functional group selected from a hydroxyl group, a salt of a hydroxyl group, a thiol group, and a salt of a thiol group reacts with a dihalogenated aromatic compound in the polymerization step.

From the viewpoint of reactivity in heating the polyarylene sulfide (A) and the compound (B) described later, the functional group in the compound (C) to be introduced into the polyarylene sulfide (A) is preferably at least one functional group selected from an amino group, two carboxyl groups respectively bonded to two adjacent carbon atoms, and an acid anhydride group derived from the two carboxyl groups, and more preferably an amino group and/or an acid anhydride group. Specific examples of the compound (C) having such a functional group include 2-aminophenol, 4-aminophenol, 3-aminophenol, 2-aminothiophenol, 4-aminothiophenol, 3-aminothiophenol, 3-hydroxyphthalic acid, 4-hydroxyphthalic acid, 3-mercaptophthalic acid, 4-mercaptophthalic acid, and compounds in which a hydroxyl group or a thiol group of these compounds is a salt of an alkali metal or an alkaline earth metal. Among them, 4-aminophenol and 4-aminothiophenol can be exemplified as preferred compounds from the viewpoint of reactivity. It is to be noted that two or more different kinds of compounds (C) can be used in combination as long as they have the characteristics described above. When a compound having a hydroxyl group or a thiol group is used as the compound (C), it is a preferred embodiment to simultaneously use an equal amount of alkali metal hydroxide. In addition, when a compound in which a hydroxyl group or a thiol group takes the form of a salt is used as the compound (C), it is also possible to form a salt in advance and then use the compound for production of a polyarylene sulfide, or it is also possible to form a salt by a reaction in a reaction vessel.

The lower limit of the amount of the compound (C) used in the polymerization reaction can be preferably 0.01 mol or more, more preferably 0.02 mol or more, still more preferably 0.04 mol or more, still more preferably 0.05 mol or more, even more preferably 0.06 mol or more, even more preferably 0.08 mol or more, particularly preferably 0.1 mol or more, relative to 1 mol of the charged inorganic sulfurizing agent. When the amount used is this value or more, a functional group can be sufficiently introduced into the polyarylene sulfide (A), which is preferable. The upper limit of the amount of the compound (C) used is preferably 0.5 mol or less, more preferably 0.45 mol or less, still more preferably 0.4 mol or less, relative to 1 mol of the charged inorganic sulfurizing agent. When the amount used is this value or less, a decrease in the molecular weight of the polyarylene sulfide (A) can be prevented, which is preferable.

The timing of addition of the compound (C) is not particularly specified, and the compound (C) may be added at any time point of the pre-polymerization step, the polymerization initiation, and the polymerization step described later, or may be added in divided portions. However, from the viewpoint of efficiently reacting the compound (C) with the dihalogenated aromatic compound, it is more preferable to add the compound (C) at the same stage as adding the dihalogenated aromatic compound to the reaction vessel.

### [Dihalogenated aromatic compound]

Examples of the dihalogenated aromatic compound used in the method for producing the polyarylene sulfide (A) include dihalogenated benzenes such as p-dichlorobenzene, o-dichlorobenzene, m-dichlorobenzene, p-dibromobenzene, o-dibromobenzene, m-dibromobenzene, 1-bromo-4-chlorobenzene, and 1-bromo-3-chlorobenzene, and dihalogenated aromatic compounds including compounds having a substituent other than halogen, such as 1-methoxy-2,5-dichlorobenzene, 1-methyl-2,5-dichlorobenzene, 1,4-dimethyl-2,5-dichlorobenzene, 1,3-dimethyl-2,5-dichlorobenzene, 2,5-dichlorobenzoic acid, 3,5-dichlorobenzoic acid, 2,5-dichloroaniline, 3,5-dichloroaniline, and bis(4-chlorophenyl)sulfide. Among these, a dihalogenated aromatic compound having a p-dihalogenated benzene represented by p-dichlorobenzene as a main component is preferable. Particularly preferably, p-dichlorobenzene is included in an amount of 80 to 100 mol%, more preferably 90 to 100 mol% in the dihalogenated aromatic compound. It is also possible to use two or more different kinds of dihalogenated aromatic compounds in combination.

The lower limit of the amount of the dihalogenated aromatic compound used is not particularly limited, but the [monomer ratio] represented by the following formula is preferably 0.8 or more, more preferably 0.9 or more, and still more preferably 0.95 or more. Setting the [monomer ratio] within the above range is preferable because the polymerization reaction system can be stabilized and side reactions can be prevented. The upper limit of the amount used is not particularly limited, but the [monomer ratio] is preferably 1.2 or less, more preferably 1.1 or less, and still more preferably 1.05 or less. Setting the [monomer ratio] within the above range is preferable because the amount of halogen remaining in the polyarylene sulfide can be reduced. Incidentally, [Amount of substance of dihalogenated aromatic compound], [Amount of substance of inorganic sulfurizing agent], and [Amount of substance of compound (C)] in the following formula represent the amounts (mol) of the respective compounds used in producing the polyarylene sulfide. 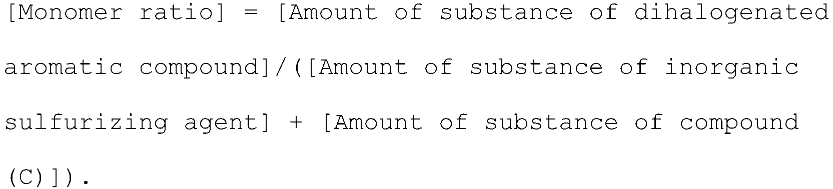 [Monomer ratio] = [Amount of substance of dihalogenated aromatic compound]/([Amount of substance of inorganic sulfurizing agent] + [Amount of substance of compound (C)]).

### [Organic polar solvent]

As the organic polar solvent, an organic amide solvent can be preferably exemplified. As specific examples, N-alkylpyrrolidones such as N-methyl-2-pyrrolidone, N-ethyl-2-pyrrolidone, and N-cyclohexyl-2-pyrrolidone, caprolactams such as N-methyl-ε-caprolactam, aprotic organic solvents represented by 1,3-dimethyl-2-imidazolidinone, N,N-dimethylacetamide, N,N-dimethylformamide, and hexamethylphosphoric acid triamide, and mixtures thereof and the like are preferably used because of their high reaction stability. Among them, N-methyl-2-pyrrolidone and 1,3-dimethyl-2-imidazolidinone are preferred, and N-methyl-2-pyrrolidone is more preferably used.

The amount of the organic polar solvent used is preferably 2.0 mol or more, more preferably 2.2 mol or more, still more preferably 2.3 mol or more, relative to 1 mol of the charged inorganic sulfurizing agent. When the amount used is this value or more, a polyarylene sulfide can be synthesized with high yield, which is preferable. The amount of the organic polar solvent used is preferably 6.0 mol or less, more preferably 5.0 mol or less, still more preferably 4.0 mol or less, relative to 1 mol of the charged inorganic sulfurizing agent. When the amount used is this value or less, the gas generated when the resulting polyarylene sulfide is heated can be reduced, which is preferable.

### [Polymerization aid]

It is also a preferred embodiment to use a polymerization aid in order to obtain a polyarylene sulfide having a relatively high degree of polymerization in a shorter time. Here, the polymerization aid means a substance having an action of increasing the viscosity of the resulting polyarylene sulfide. Specific examples of such a polymerization aid include organic carboxylates, water, alkali metal chlorides, organic sulfonates, alkali metal sulfates, alkaline earth metal oxides, alkali metal phosphates, and alkaline earth metal phosphates. These may be used singly, or two or more kinds thereof may be used simultaneously. Among these, an organic carboxylate, water and an alkali metal chloride are preferred. Further, the organic carboxylate is preferably an alkali metal carboxylate, and the alkali metal chloride is preferably lithium chloride.

The alkali metal carboxylate described above is a compound represented by the general formula: R(COOM)ₙ (wherein R represents an alkyl group having from 1 to 20 carbon atoms, a cycloalkyl group, an aryl group, an alkylaryl group or an arylalkyl group; M represents an alkali metal selected from the group consisting of lithium, sodium, potassium, rubidium and cesium; and n is an integer of 1 to 3). The alkali metal carboxylate can also be used in the form of a hydrate, an anhydrous form or an aqueous solution. Specific examples of the alkali metal carboxylate include lithium acetate, sodium acetate, potassium acetate, sodium propionate, lithium valerate, sodium benzoate, and mixtures thereof.

The alkali metal carboxylate may be synthesized by adding an organic acid and one or more compounds selected from the group consisting of an alkali metal hydroxide, an alkali metal carbonate, and an alkali metal bicarbonate at almost equal chemical equivalents and reacting them. Among the above alkali metal carboxylates, the lithium salt has high solubility in the reaction system and a large auxiliary effect, but is expensive. On the other hand, potassium, rubidium, and cesium salts are considered to have insufficient solubility in the reaction system, and therefore sodium acetate which is inexpensive and has moderate solubility in the polymerization system is most preferably used.

When these alkali metal carboxylates are used as polymerization aids, the amount thereof to be used is usually preferably in the range of 0.01 mol to 2 mol, more preferably in the range of 0.1 mol to 0.6 mol, and still more preferably in the range of 0.2 mol to 0.5 mol, with respect to 1 mol of the charged inorganic sulfurizing agent, from the viewpoint of obtaining a higher degree of polymerization.

When water is used as a polymerization aid, the addition amount is usually preferably in the range of 0.3 mol to 15 mol, more preferably in the range of 0.6 mol to 10 mol, and still more preferably in the range of 1 mol to 5 mol, with respect to 1 mol of the charged inorganic sulfurizing agent, from the viewpoint of obtaining a higher degree of polymerization.

It is of course possible to use two or more of these polymerization aids in combination, and for example, when an alkali metal carboxylate and water are used in combination, a higher molecular weight can be achieved with a smaller amount of the alkali metal carboxylate and water.

The timing of addition of these polymerization aids is not particularly specified, and these polymerization aids may be added at any time point of the pre-polymerization step, polymerization initiation, and polymerization step described later, or may be added in divided portions. When an alkali metal carboxylate is used as the polymerization aid, it is more preferable to add the alkali metal carboxylate simultaneously with other additives at the start of the pre-polymerization step or at the polymerization initiation from the viewpoint of easy addition. Further, in the case of using water as the polymerization aid, it is effective to add it after charging the dihalogenated aromatic compound, and in the middle of the polymerization step.

### [Polymerization Stabilizer]

To stabilize the polymerization reaction system and to prevent side reactions, a polymerization stabilizer can also be used. The polymerization stabilizer contributes to stabilizing the polymerization reaction system, and reducing undesired side reactions. One indication of side reactions is the production of thiophenol. The addition of a polymerization stabilizer can suppress the production of thiophenol. Specific examples of the polymerization stabilizer include compounds such as alkali metal hydroxides, alkali metal carbonates, alkaline earth metal hydroxides and alkaline earth metal carbonates. Among these, alkali metal hydroxides such as sodium hydroxide, potassium hydroxide and lithium hydroxide are preferred. The above-described alkali metal carboxylate also acts as the polymerization stabilizer, and thus is deemed as one kind of the polymerization stabilizer. It has been described above that, in the case of using an alkali metal hydrosulfide as the inorganic sulfurizing agent, it is particularly preferred to use an alkali metal hydroxide at the same time. It is noted here that the alkali metal hydroxide used in excess with respect to the amount of the sulfurizing agent can also act as the polymerization stabilizer.

These polymerization stabilizers can be used singly, or in combinations of two or more thereof. The polymerization stabilizer is usually preferably used in a ratio of 0.02 mol to 0.2 mol, more preferably 0.03 mol to 0.1 mol, and still more preferably 0.04 mol to 0.09 mol, based on 1 mol of the charged inorganic sulfurizing agent. If the ratio is small, the stabilization effect is low, and conversely, if the ratio is too large, it is economically disadvantageous, and the polymer yield tends to decrease.

The time point at which such a polymerization stabilizer is added is not particularly limited. The polymerization stabilizer may be added at any time point of the pre-polymerization step, the polymerization initiation, and the polymerization step to be described later, or may be added in divided portions. However, it is more preferred to add it at the same time as the time of initiating the pre-polymerization step or the time of the polymerization initiation, because of ease of addition.

Next, a preferred method for producing a polyarylene sulfide will be specifically described in order of a pre-polymerization step, a polymerization step, a recovery step, and a post-treatment step, but the method is not limited thereto.

### [Pre-polymerization step]

In the method for producing a polyarylene sulfide (A), the inorganic sulfurizing agent is usually used in the form of a hydrate. Before adding the dihalogenated aromatic compound, it is preferable to raise the temperature of the mixture including the organic polar solvent and the inorganic sulfurizing agent to remove an excessive amount of water to the outside of the system.

Further, as described above, as the inorganic sulfurizing agent, it is possible to use an inorganic sulfurizing agent prepared from an alkali metal hydrosulfide and an alkali metal hydroxide either in situ in the reaction system or in a vessel separate from the polymerization vessel. This method is not particularly limited, but examples thereof include a method in which an alkali metal hydrosulfide and an alkali metal hydroxide are added to an organic polar solvent in an inert gas atmosphere at a temperature range of normal temperature to 150°C, preferably normal temperature to 100°C, and the temperature is raised to at least 150°C or more, preferably 180°C to 260°C under normal pressure or reduced pressure to distill off moisture. At this stage, a polymerization aid may be added, or the compound (C) may be added. In addition, toluene or the like may be added to carry out the reaction, in order to accelerate the removal of moisture by distillation.

The amount of water in the system at the end of the pre-polymerization step, that is, before the polymerization step is preferably 0.3 mol to 10.0 mol per 1 mol of the charged sulfurizing agent. Here, the amount of water in the system is an amount obtained by subtracting the amount of water removed to the outside of the polymerization system from the amount of water added to the polymerization system. Further, the water to be charged may be in any form, such as in the form of water, an aqueous solution, or crystal water.

### [Polymerization step]

A polyarylene sulfide (A) is produced by reacting at least an inorganic sulfurizing agent, a dihalogenated aromatic compound and the compound (C) in an organic polar solvent at 200°C or more and less than 290°C.

When the polymerization step is started, an organic polar solvent, a sulfurizing agent, and a dihalogenated aromatic compound are desirably mixed in an inert gas atmosphere in a temperature range of normal temperature to 240°C, preferably 100°C to 230°C. At this stage, the compound (C) and a polymerization aid may be added. These raw materials may be charged in an arbitrary order, or may be charged simultaneously.

The mixture is usually heated to a range of 200°C to less than 290°C. The rate of temperature increase is not particularly limited, but usually a rate of 0.01°C/min to 5°C/min is selected, and a range of 0.1°C/min to 3°C/min is more preferable.

In general, the temperature is finally raised to a temperature of 250°C to less than 290°C, and the mixture is reacted at the temperature for usually 0.25 hours to 50 hours, and preferably 0.5 hours to 20 hours.

A method in which the reaction is carried out at, for example, 200°C to 260°C for a certain period of time before reaching the final temperature, and then the temperature is raised to 270°C to less than 290°C is effective in obtaining a higher degree of polymerization. At this time, as the reaction time at 200°C to 260°C, usually a range of 0.25 hours to 20 hours is selected, and preferably a range of 0.25 hours to 10 hours is selected.

In order to adjust the molecular weight of the polymer, it is also possible to add the compound (C) in the middle of polymerization, but from the viewpoint of an efficient reaction of the compound (C), it is more preferable to add at least a part of the compound (C) at the same stage as the dihalogenated aromatic compound.

### [Recovery Step]

In the method for producing a polyarylene sulfide (A), a solid is recovered from a polymerization reaction product including a polymer, a solvent, and the like after completion of polymerization. As the recovery method, any known method may be employed.

For example, a method of performing a gradual cooling after completion of the polymerization reaction to recover a particulate polymer may be used. The rate of gradual cooling at this time is not particularly limited, and is usually within the range of from about 0.1°C/min to 3°C/min. It is not necessary to perform gradual cooling at the same rate throughout the entire gradual cooling step, and a method may be employed in which gradual cooling is performed at a rate of 0.1°C/min to 1°C/min until polymer particles are crystallized and precipitated, and thereafter at a rate of 1°C/min or more.

In addition, it is also one of the preferred methods to perform the above recovery under rapid cooling conditions. Among these recovery methods, a flash method is preferable. The flash method is a method in which a polymerization reaction product is flashed from a high temperature and high pressure (usually 250°C or more and 8 kg/cm² or more) state to an atmosphere of normal pressure or reduced pressure, and a polymer is recovered in a powdery form simultaneously with solvent recovery. The term "flash" as used herein means that a polymerization reaction product is ejected from a nozzle. Specific examples of the atmosphere for flashing include nitrogen or water vapor at normal pressure, and the temperature thereof is usually selected in the range of 150°C to 250°C.

### [Post-treatment step]

The polyarylene sulfide can be produced through the above polymerization step and the recovery step, and then subjected to an acid treatment, a hot water treatment, or washing with an organic solvent as a post-treatment step. From the viewpoint of removing impurities, in the post-treatment step, it is preferable to perform any one of acid treatment, hot water treatment, and washing with an organic solvent, and it is more preferable to use two or more kinds of treatments in combination.

The acid treatment is performed as follows. The acid used for the acid treatment is not particularly limited as long as it does not have the action of decomposing the polyarylene sulfide (A), and examples thereof include acetic acid, hydrochloric acid, sulfuric acid, phosphoric acid, silicic acid, carbonic acid, propyl acid, etc. Among them, an acid selected from acetic acid and hydrochloric acid is more preferably used. On the other hand, an acid that decomposes and deteriorates the polyarylene sulfide (A) such as nitric acid is not preferable. As a method of the acid treatment, for example, there is a method of immersing the polyarylene sulfide (A) in an acid or an aqueous solution of an acid, and it is also possible to stir or heat the polyarylene sulfide (A) as necessary. When an acid solution is used, the solution may be a solution using an organic solvent or an aqueous solution, but an aqueous solution is preferable from the viewpoint that the miscibility of the acid and the solubility of the salt or basic component included in the polyarylene sulfide tend to be relatively high. The water used is preferably distilled water or deionized water in order not to impair the effect of the preferred chemical modification of the polyarylene sulfide. For example, when acetic acid is used, a sufficient effect can be obtained by immersing the polyarylene sulfide (A) powder in an acetic acid aqueous solution having a pH of 4 heated to 80°C to 200°C and stirring the powder for 30 minutes. The pH after the treatment may be 4 or more, and may be, for example, about pH4 to 8. In order to remove an acid, a salt, or the like remaining in the acid-treated polyarylene sulfide (A), it is preferable to further wash the polyarylene sulfide with water or warm water several times. The water used for washing is preferably distilled water or deionized water in order not to impair the effect of the preferred chemical modification of the polyarylene sulfide (A). When the acid treatment is performed, a polyarylene sulfide copolymer having a higher molecular weight tends to be obtained when a polyarylene sulfide copolymer is obtained using the polyarylene sulfide (A), which is preferable.

The hot water treatment is performed as follows. When the polyarylene sulfide (A) is subjected to a hot water treatment, the temperature of the hot water is preferably 100°C or more, more preferably 120°C or more, still more preferably 150°C or more, and particularly preferably 170°C or more. When the temperature is lower than 100°C, the effect of preferable chemical modification of the polyarylene sulfide is small, which is not preferable. The water to be used is preferably distilled water or deionized water in order to exhibit the effect of preferable chemical modification of the polyarylene sulfide (A) by the hot water treatment. The operation of the hot water treatment is not particularly limited. The treatment is performed by a method in which a predetermined amount of the polyarylene sulfide (A) is charged to a predetermined amount of water and heated and stirred in a pressure vessel, a method in which a hot water treatment is continuously performed, or the like. A larger amount of water relative to the polyarylene sulfide (A) is preferred, but usually, a bath ratio of 200 g or less of the polyarylene sulfide (A) to 1 liter of water (the weight of the washing liquid based on the weight of the dry polyarylene sulfide (A)) is selected. In addition, in order to avoid unfavorable decomposition of the terminal reactive functional group, it is desirable that the atmosphere of the treatment is an inert atmosphere. Furthermore, in order to remove the remaining components, the polyarylene sulfide (A) after the hot water treatment operation is preferably washed several times with warm water.

The case of washing with an organic solvent is as follows. The organic solvent used for washing the polyarylene sulfide (A) is not particularly limited as long as it does not have an action of decomposing the polyarylene sulfide. Nitrogen-containing polar solvents such as N-methyl-2-pyrrolidone, dimethylformamide, and dimethylacetamide; sulfoxide/sulfone-based solvents such as dimethyl sulfoxide, dimethyl sulfone, and sulfolane; ketone-based solvents such as acetone, methyl ethyl ketone, diethyl ketone, and acetophenone; ether-based solvents such as dimethyl ether, dipropyl ether, dioxane, and tetrahydrofuran; halogen-based solvents such as chloroform, methylene chloride, trichloroethylene, ethylene dichloride, and perchlorethylene; alcohol-based solvents such as methanol, ethanol, propanol, butanol, pentanol, ethylene glycol, and propylene glycol; and aromatic hydrocarbon solvents such as benzene, toluene, and xylene are exemplified as the organic solvent used for washing the polyarylene sulfide (A). Among these organic solvents, N-methyl-2-pyrrolidone, acetone, dimethylformamide, chloroform, and the like are preferably used. In addition, from the viewpoint of removing impurities having an arylene sulfide structure, a solvent selected from N-methyl-2-pyrrolidone, dimethylformamide, and chloroform, which are nitrogen-containing polar solvents that are likely to obtain relatively high solubility, is particularly preferable. These organic solvents may be used singly or in combination of two or more kinds thereof, or may be used in combination with water. As a method of washing with an organic solvent, for example, there is a method of immersing the polyarylene sulfide (A) in an organic solvent, and it is also possible to appropriately stir or heat the polyarylene sulfide (A) as necessary. The washing temperature when washing the polyarylene sulfide (A) with the organic solvent is not particularly limited, and any temperature from about normal temperature to 300°C can be selected. While a higher washing temperature tends to result in a higher washing efficiency, a sufficient washing effect can be obtained usually at a washing temperature in the range of from normal temperature to 150°C. It is also possible to perform washing in a pressure vessel, at a temperature equal to or higher than the boiling point of the organic solvent, and under pressure. The washing time is not particularly limited, as well. Although it varies depending on the washing conditions, a sufficient effect can be obtained usually by washing for 5 minutes or more in the case of performing washing in a batch process. It is also possible to perform washing in a continuous process. The organic solvent is preferable because the amount of gas generated during heating of the polyarylene sulfide (A) is reduced, and a high-molecular-weight compound tends to be easily obtained when a polyarylene sulfide copolymer described later is obtained using the polyarylene sulfide (A).

### [Thermal oxidative crosslinking treatment]

It is also possible to use the polyarylene sulfide (A) increased in molecular weight by a thermal oxidative crosslinking treatment, such as heating in an oxygen atmosphere after completion of polymerization or heating with an addition of a crosslinking agent such as a peroxide. However, the number average molecular weight of the polyarylene sulfide (A) is preferably 10,000 or less.

### [Compound (B)]

The compound (B) is a compound for producing a polyarylene sulfide copolymer by reacting with the polyarylene sulfide (A).

The compound (B) is at least one compound selected from the formulas (a') to (u'). X is at least one selected from two carboxyl groups respectively bonded to two adjacent carbon atoms or an acid anhydride group derived from the two carboxyl groups, an amino group, a hydroxyl group, a carboxyl group, a silanol group, a sulfonic acid group, an acetamide group, a sulfonamide group, a cyano group, an isocyanate group, an aldehyde group, an acetyl group, an epoxy group, and an alkoxysilyl group. R3^{,} R⁴, and R⁵ are each a substituent selected from hydrogen, an alkyl group having 1 to 12 carbon atoms, an arylene group having 6 to 24 carbon atoms, and a halogen group, and R³, R⁴, and R⁵ may be the same or different. From the viewpoint of easy availability, hydrogen, a methyl group, an ethyl group, or a propyl group is preferable. The aromatic ring of each compound may be disubstituted or trisubstituted, and a plurality of substituents X on one aromatic ring may be the same or different. From the viewpoint of reactivity in heating the polyarylene sulfide (A) and the compound (B) described above, the compound (B) preferably contains, as a functional group, at least one functional group selected from an amino group, two carboxyl groups respectively bonded to two adjacent carbon atoms, and an acid anhydride group derived from the two carboxyl groups. Furthermore, since the combination of the functional group of the polyarylene sulfide (A) and the functional group of the compound (B) is more preferably an amino group and an acid anhydride group from the viewpoint of reactivity, the compound (B) more preferably contains an amino group and/or an acid anhydride group. In particular, from the viewpoint of ease of polymerization reaction when the polyarylene sulfide (A) is produced by the production method described above, the functional group of the polyarylene sulfide (A) is preferably an amino group, and accordingly, the functional group of the compound (B) is preferably an acid anhydride group.

Specific examples of the compound (B) include pyromellitic acid, 3,3',4,4'-thiodiphthalic acid, 3,3',4,4'-sulfonyldiphthalic acid, 3,3',4,4'-benzophenonetetracarboxylic acid, 3,3',4,4'-sulfinyldiphthalic acid, 3,3',4,4'-biphenyltetracarboxylic acid, 3,3',4,4'-tetracarboxyldiphenylmethane, 9,9-bis(3,4-dicarboxyphenyl)fluorene, naphthalene-1,4,5,8-tetracarboxylic acid, bicyclo[2.2.2]oct-7-ene-2,3,5,6-tetracarboxylic acid, 3,4,9,10-perylenetetracarboxylic acid, pyromellitic anhydride, 3,3',4,4'-thiodiphthalic anhydride, 3,3',4,4'-sulfonyldiphthalic anhydride, 3,3',4,4'-benzophenonetetracarboxylic dianhydride, 3,3',4,4'-sulfinyldiphthalic anhydride, 3,3',4,4'-biphenyltetracarboxylic dianhydride, 3,3',4,4'-tetracarboxyldiphenylmethane dianhydride, 9,9-bis(3,4-dicarboxyphenyl)fluorene dianhydride, naphthalene-1,4,5,8-tetracarboxylic dianhydride, glycerin bisanhydrotrimellitate monoacetate, ethylene glycol bisanhydrotrimellitate, bicyclo[2.2.2]oct-7-ene-2,3,5,6-tetracarboxylic dianhydride, 3,4,9,10-perylenetetracarboxylic dianhydride, 4,4'-thiodibenzoic acid, 4,4'-dicarboxylbenzophenone, 4,4'-sulfinyldibenzoic acid, 4,4'-dicarboxylbiphenyl, p-phenylenediamine, 4,4'-diaminodiphenyl sulfide, 4,4'-diaminodiphenyl sulfone, 4,4'-diaminobenzophenone, 4,4'-diaminodiphenylmethane, 4,4'-diaminodiphenyl ether, 2,7-diaminofluorene, o-toluidine, 1,5-diaminonaphthalene, p-benzenediol, 4,4'-dihydroxydiphenyl sulfide, 4,4'-dihydroxydiphenyl sulfone, 4,4'-dihydroxybenzophenone, 4,4'-dihydroxydiphenylmethane, 4,4'-dihydroxydiphenyl ether, 2,7-dihydroxyfluorene, 4,4'-dihydroxybiphenyl, and 1,5-dihydroxynaphthalene. From the viewpoint of reactivity, compounds selected from 3,3',4,4'-thiodiphthalic anhydride, 3,3',4,4'-benzophenonetetracarboxylic dianhydride, 3,3',4,4'-sulfinyldiphthalic anhydride, 3,3',4,4'-biphenyltetracarboxylic dianhydride, 9,9-bis(3,4-dicarboxyphenyl)fluorene dianhydride, 4,4'-thiodibenzoic acid, 4,4'-dicarboxylbenzophenone, 4,4'-sulfinyldibenzoic acid, 4,4'-dicarboxylbiphenyl, pyromellitic acid, pyromellitic anhydride, 4,4'-diaminodiphenyl sulfone, 4,4'-diaminobenzophenone, and 2,7-diaminofluorene are preferably used.

### [Production of polyarylene sulfide copolymer]

The polyarylene sulfide copolymer can be produced by heating the polyarylene sulfide (A) and the compound (B).

The ratio of the functional group content derived from the compound (B) [µmol/g]/the functional group content derived from the polyarylene sulfide (A) [µmol/g] is preferably 0.75 or more and 1.25 or less. Within this range, the resulting polyarylene sulfide copolymer tends to have a high molecular weight, and tends to exhibit sufficient mechanical properties and chemical resistance.

The entire amount of the polyarylene sulfide (A) and the compound (B) may be mixed and heated from the beginning, or at least a part of the polyarylene sulfide (A) and at least a part of the compound (B) may be mixed and heated, and then the remaining polyarylene sulfide (A) and/or the compound (B) may be mixed and heated. In the latter case, after at least a part of the polyarylene sulfide (A) and at least a part of the compound (B) are mixed and heated, the remaining polyarylene sulfide (A) and/or compound (B) may be subsequently mixed and heated, or after at least a part of the polyarylene sulfide (A) and at least a part of the compound (B) are mixed and heated, the product may be taken out once, and the remaining polyarylene sulfide (A) and/or compound (B) may be further mixed and heated. From the viewpoint of efficiently obtaining the polyarylene sulfide copolymer, it is preferable to mix and heat the entire amount of the polyarylene sulfide (A) and the compound (B) from the beginning. On the other hand, it is preferable that at least a part of the polyarylene sulfide (A) and at least a part of the compound (B) are mixed and heated, and then the remaining polyarylene sulfide (A) and/or compound (B) are mixed and heated, from the viewpoint of ease of control and ease of adjustment of the thermal characteristics such as the glass transition temperature, crystallization temperature, and melting point, the molecular weight, and the terminal species and the amount thereof according to the application of the polyarylene sulfide copolymer.

The lower limit of the heating temperature can be, for example, 200°C or more, and is preferably 230°C or more, more preferably 250°C or more. By setting the lower limit of the heating temperature to such a range, the reaction between the polyarylene sulfide (A) and the compound (B) can be easily promoted. The reaction tends to be completed in a shorter time by setting the heating temperature to be equal to or higher than the temperature at which the polyarylene sulfide (A) is melted. The temperature at which the polyarylene sulfide (A) melts varies depending on the composition and molecular weight of the polyarylene sulfide (A) and the environment at the time of heating, and thus cannot be uniquely indicated, but can be grasped by, for example, analyzing the polyarylene sulfide (A) with a differential scanning calorimeter. The upper limit of the heating temperature can be, for example, 400°C or less, and is preferably 380°C or less, more preferably 360°C or less. By setting the upper limit of the heating temperature within such a range, it tends to be possible to suppress undesirable side reactions represented by a crosslinking reaction or a decomposition reaction between the polyarylene sulfides (A) or the like, and to suppress deterioration of the properties of the resulting polyarylene sulfide copolymer.

The time for performing heating varies depending on the composition and molecular weight of the polyarylene sulfide (A) and the environment at the time of heating, and thus cannot be uniquely indicated, but it is preferable to set such that the above-described unfavorable side reaction does not occur as much as possible. The lower limit of the heating time can be, for example, 0.1 minutes or more, and is preferably 1 minute or more, more preferably 2 minutes or more, still more preferably 3 minutes or more. By setting the lower limit of the heating time within such a range, the reaction between the polyarylene sulfide (A) and the compound (B) can be more sufficiently advanced. The upper limit of the heating time is, for example, 100 hours or less, preferably 20 hours or less, more preferably 10 hours or less, still more preferably 1 hour or less. By setting the upper limit of the heating time within such a range, the process tends to be excellent in economic efficiency and to avoid the above-described unfavorable side reactions.

The heating can be performed in the absence of a solvent or in the presence of a solvent. When the heating is carried out in the presence of a solvent, the solvent is not particularly limited as long as it does not substantially cause unfavorable side reactions such as decomposition or crosslinking of the produced polyarylene sulfide copolymer. The solvent can be used as one kind or as a mixture of two or more kinds. On the other hand, from the viewpoint of efficiently obtaining the polyarylene sulfide copolymer, it is preferable to perform the heating under substantially solvent-free conditions. In addition, from the viewpoint of preventing contamination of the molded article by the generated gas when molding the resulting polyarylene sulfide copolymer, it is preferable to perform the heating under substantially solvent-free conditions. Here, the substantially solvent-free condition means that the amount of the solvent in the system for heating the polyarylene sulfide (A) and the compound (B) is 10 wt% or less, preferably 3 wt% or less.

The heating in the method for producing a polyarylene sulfide copolymer of the present invention can be performed not only by a method using an ordinary polymerization reactor, but also in a mold for producing a molded article, or by using an extruder or a melt kneader. A method using a device including a heating mechanism can be performed without particular limitation, and a known method such as a batch method or a continuous method can be adopted.

The atmosphere during heating is preferably a non-oxidizing atmosphere, and the heating is also preferably performed under reduced pressure conditions. When the reaction is carried out under a reduced pressure condition, it is preferable to set the atmosphere in the reaction system to a non-oxidizing atmosphere once and then to a reduced pressure condition. As a result, it tends to be possible to suppress undesirable side reactions such as a crosslinking reaction or a decomposition reaction between the polyarylene sulfides (A) or between the generated polyarylene sulfide copolymers. The non-oxidizing atmosphere refers to an atmosphere in which the oxygen concentration in the gas phase is 5% by volume or less, preferably 2% by volume or less, and more preferably substantially no oxygen is contained, that is, an inert gas atmosphere such as nitrogen, helium, or argon. Among them, a nitrogen atmosphere is particularly preferable from the viewpoint of economy and ease of handling. The reduced pressure condition means that the pressure in the system in which the reaction is performed is lower than the atmospheric pressure, and the upper limit of the pressure is preferably 50 kPa or less, more preferably 20 kPa or less, still more preferably 10 kPa or less. By setting the upper limit of the pressure within such a range, undesirable side reactions such as a crosslinking reaction tend to be suppressed. The lower limit of the pressure may be 0.1 kPa or more. By setting the lower limit of the pressure to 0.1 kPa or more, it is possible to avoid a load on the reactor due to excessive pressure reduction.

### [Method for producing polyarylene sulfide copolymer particles]

The polyarylene sulfide copolymer particles can be produced by a process including step 1 of melt-kneading the polyarylene sulfide copolymer and the water-soluble thermoplastic resin, and step 2 of removing the water-soluble thermoplastic resin by washing with water or alcohols.

### [Step 1]

### [Water-soluble thermoplastic resin]

In the method for producing polyarylene sulfide copolymer particles of the present invention, a water-soluble thermoplastic resin is used. There are no restrictions as long as it is a water-soluble thermoplastic resin, but specific examples thereof include polyalkylene glycol, polyvinyl alcohol, polyvinylpyrrolidone, polyamide, polyamide-imide, etc., and polyalkylene glycol can be preferably used. In the present invention, the use of the water-soluble thermoplastic resin is preferable in that water or alcohols can be used in the washing step described later, and the worker can be prevented from being exposed to the organic solvent. It is also preferable from the viewpoint of being able to reduce the emission of chemical substances into the environment. The 10% weight loss temperature of the water-soluble thermoplastic resin is preferably 300°C or more. The 10% weight loss temperature of 300°C or more is preferable because the amount of decomposed gas decreases in the step of melt-kneading with the polyarylene sulfide copolymer. The 10% weight loss temperature can be analyzed, for example, by thermogravimetric measurement under nitrogen flow, and examples of polymers having a 10% weight loss temperature of 300°C or more can include polyalkylene glycol and polyvinylpyrrolidone. The water-soluble thermoplastic resin is preferably immiscible with the polyarylene sulfide copolymer during melt-kneading. The term "immiscible" refers to a state in which both resins are not completely mixed at the molecular level even though the resins seem to be kneaded at the macro level. When the water-soluble thermoplastic resin is immiscible with the polyarylene sulfide copolymer, for example, when the resin composition is washed with water or alcohols, the water-soluble thermoplastic resin is easily separated and removed, so that polyarylene sulfide copolymer fine particles are obtained, which is preferable. When the water-soluble thermoplastic resin is miscible with the polyarylene sulfide copolymer, since both are integrated inside the resin composition, polyarylene sulfide copolymer fine particles are not obtained even if washing is performed with water or alcohols. Whether or not the water-soluble thermoplastic resin is immiscible with the polyarylene sulfide copolymer cannot be said unconditionally because of the conditions at the time of kneading and the composition of the polyarylene sulfide copolymer, but examples of the water-soluble thermoplastic resin that is likely to be immiscible with the polyarylene sulfide copolymer include polyalkylene glycol.

The form of the polyarylene sulfide copolymer as a raw material of the polyarylene sulfide copolymer particles of the present invention is not particularly limited, and examples thereof include powders, pellets, fibers, films, molded articles, and granules. In general, as methods for atomizing a resin, dry pulverization, wet pulverization, and freezing pulverization using a jet mill, a bead mill, a hammer mill, a ball mill, a cutter mill, a stone die mill, or the like are known. However, in the case of using a pellet or a molded article as a raw material, these methods cause problems such as insufficient pulverization, failure to obtain particles having a desired particle diameter, necessity of long time pulverization, and deterioration of economic efficiency and productivity. However, in this method, it is possible to easily form particles even when pellets or molded articles are used as raw materials.

The lower limit of the glass transition temperature of the polyarylene sulfide copolymer to be used for production of the polyarylene sulfide copolymer particles of the present invention is 95°C or more, preferably 100°C or more, and more preferably 110°C or more. When the glass transition temperature is lower than 95°C, high rigidity cannot be obtained under high-temperature conditions. The upper limit of the glass transition temperature is 190°C or less, preferably 180°C or less, and more preferably 160°C or less. When the glass transition temperature is higher than 190°C, chemical resistance is insufficient.

The glass transition temperature of the polyarylene sulfide copolymer as a raw material and the glass transition temperature of the polyarylene sulfide copolymer particles may change depending on the conditions for producing the polyarylene sulfide copolymer fine particles. The glass transition temperature of the polyarylene sulfide copolymer or the polyarylene sulfide copolymer particles is defined as an inflection point of a baseline shift detected when the temperature is raised from 0°C to 340°C at a rate of 20°C/min using a differential scanning calorimeter by the method described later.

The lower limit of the weight average molecular weight of the polyarylene sulfide copolymer to be used for production of the polyarylene sulfide copolymer particles of the present invention is preferably 30,000 or more, more preferably 40,000 or more, still more preferably 50,000 or more. When the weight average molecular weight is 30,000 or more, the mechanical properties of the polyarylene sulfide copolymer fine particles tend to be improved. The upper limit of the molecular weight of the polyarylene sulfide copolymer particles is not particularly limited, but can be, for example, 200,000 or less in terms of weight average molecular weight, and is preferably 150,000 or less, more preferably 100,000 or less. When the upper limit of the weight average molecular weight is within the above range, the moldability of the polyarylene sulfide copolymer particles tends to be excellent.

The weight average molecular weight of the polyarylene sulfide copolymer as a raw material and the weight average molecular weight of the polyarylene sulfide copolymer particles may vary depending on the conditions for producing the polyarylene sulfide copolymer particles. The degree of change can be evaluated by Mw retention rate, which is a percentage of a value obtained by dividing the weight average molecular weight of the polyarylene sulfide copolymer particles by the molecular weight of the polyarylene sulfide copolymer used for particle production. The Mw retention rate is preferably 50% or more, more preferably 60% or more, still more preferably 80% or more. When the Mw retention rate is within the above range, the mechanical properties of the polyarylene sulfide copolymer particles can be kept high, which is preferable. There is no particular restriction on the upper limit of the Mw retention rate, but it is preferably 150% or less, and more preferably 130% or less. When the Mw retention rate is more than 150%, the viscosity becomes high and handling becomes not easy. Since the Mw retention rate varies depending on the stability of the polyarylene sulfide copolymer when the polyarylene sulfide copolymer is dissolved in a solvent in the dissolution step as described later, the Mw retention rate can be adjusted depending on the type of the solvent to be used and the water content.

### [Polyalkylene glycol]

Examples of a particularly preferable water-soluble thermoplastic resin to be used in the method for producing polyarylene sulfide copolymer particles of the present invention include polyalkylene glycol. The polyalkylene glycol to be used in the present invention is not particularly limited, and specific examples thereof include polyethylene glycol, polypropylene glycol, polytetramethylene glycol, polypentamethylene glycol, polyhexamethylene glycol, polyethylene glycol-polytetramethylene glycol copolymers, and alkylphenyl ether forms in which hydroxyl groups at one terminal or both terminals thereof are blocked with a methyl group, an ethyl group, a propyl group, an isopropyl group, a butyl group, a hexyl group, an octyl group, a decyl group, a dodecyl group, a hexadecyl group, an octadecyl group or the like. Among them, polyethylene glycol or polypropylene glycol is preferable from the viewpoint of ease of removal by washing, and polyethylene glycol is more preferably used.

The lower limit of the weight average molecular weight of the polyalkylene glycol is preferably 1,000 or more, more preferably 2,000 or more, still more preferably 10,000 or more. When the polyalkylene glycol is melt-kneaded with the polyphenylene sulfide copolymer, a uniform dispersed state is obtained, and therefore it is preferable that the polyalkylene glycol is in the above range. The upper limit of the weight average molecular weight of the polyalkylene glycol is preferably 1,000,000 or less, preferably 800,000 or less, still more preferably 500,000 or less. It is preferably in the above range from the viewpoint of ease of removal by washing.

The lower limit of the viscosity ratio ηa/ηb of the melt viscosity (ηa) of the polyarylene sulfide copolymer to the melt viscosity (ηb) of the water-soluble thermoplastic resin is preferably 0.1 or more, and more preferably 1 or more. The upper limit is preferably 1000 or less, more preferably 500 or less, and still more preferably 300 or less. The particle diameter of the obtained particles tends to decrease as the melt viscosity ratio ηa/ηb approaches 1, but there is no problem in approaching 1 in producing particles having a D50 particle diameter of 1 µm or more. When the melt viscosity ratio ηa/ηb is not less than the above lower limit and not more than the upper limit, polyarylene sulfide copolymer particles having a D50 particle diameter of 1,000 µm or less can be produced, which is preferable.

The melt viscosities of the polyarylene sulfide copolymer and the water-soluble thermoplastic resin referred to herein are complex viscosities at 300°C obtained by dynamic viscoelasticity measurement in a molten state.

The ratio of the polyarylene sulfide copolymer to the water-soluble thermoplastic resin is not limited as long as the polyarylene sulfide copolymer is well dispersed in the water-soluble thermoplastic resin, but the lower limit of the ratio is preferably 1 part by weight or more, more preferably 10 parts by weight or more, and still more preferably 30 parts by weight or more of the polyarylene sulfide copolymer to 100 parts by weight of the water-soluble thermoplastic resin. The above range is preferable from the viewpoint of economic efficiency and productivity. From the viewpoint of ensuring good dispersion of the polyarylene sulfide copolymer in the polyalkylene glycol during melt-kneading, the amount of the polyarylene sulfide copolymer is preferably 100 parts by weight or less, more preferably 80 parts by weight, and still more preferably 50 parts by weight or less with respect to 100 parts by weight of the polyalkylene glycol.

At the time of melt-kneading, it is also possible to blend other components other than the polyarylene sulfide copolymer and the water-soluble thermoplastic resin, and other thermoplastic resins, antioxidants, compatibilizers, and the like may be included. Specific examples of other thermoplastic resins include vinyl chloride resin, vinylidene chloride resin, vinyl acetate resin, polyvinyl alcohol, polyvinyl acetal, polystyrene, AS resin, ABS resin, methacrylic resin, polyethylene, polypropylene, polyamide, polyacetal, polycarbonate, polyethylene terephthalate, polybutylene terephthalate, liquid crystal polyester resin, polyphenylene ether, polyphenylene sulfide, polyarylate, polysulfone, polyether sulfone, polyether imide, polyether ether ketone, fluororesin, and thermoplastic elastomer. The amount of other components is preferably 10 parts by weight or less, and more preferably 5 parts by weight or less with respect to 100 parts by weight of the water-soluble thermoplastic resin.

In the method for producing polyarylene sulfide copolymer particles of the present invention, it is necessary to disperse the polyarylene sulfide copolymer in a water-soluble thermoplastic resin. Therefore, it is preferable to heat a mixture obtained by mixing the polyarylene sulfide copolymer and the water-soluble thermoplastic resin. The required heating temperature varies depending on the molecular weight, structure, concentration, solvent type, and the like of the polyarylene sulfide copolymer, but is usually preferably 250°C or more, more preferably 270°C or more, still more preferably 300°C or more. The upper limit is preferably 400°C or less, more preferably 320°C or less from the viewpoint of suppressing decomposition of the polyarylene sulfide copolymer and the water-soluble thermoplastic resin.

The heating in the present production method can be performed not only by a method using an ordinary polymerization reactor, but also in a mold for producing a molded article, or by using an extruder or a melt kneader. A method using a device including a heating mechanism can be performed without particular limitation, and a known method such as a batch method or a continuous method can be adopted. From the viewpoint of dispersibility of the polyarylene sulfide copolymer in the water-soluble thermoplastic resin and productivity, a method of melt-kneading the polyarylene sulfide copolymer using an extruder can be preferably exemplified. Melt-kneading is preferably performed under substantially solvent-free conditions. Substantially solvent-free means that the solvent in the mixture is 10 wt% or less, more preferably 3 wt% or less.

The atmosphere during heating is preferably a non-oxidizing atmosphere, and the heating is also preferably performed under reduced pressure conditions. When the reaction is carried out under a reduced pressure condition, it is preferable to set the atmosphere in the reaction system to a non-oxidizing atmosphere once and then to a reduced pressure condition. The non-oxidizing atmosphere refers to an atmosphere in which the oxygen concentration in the gas phase is 5% by volume or less, preferably 2% by volume or less, and more preferably substantially no oxygen is contained, that is, an inert gas atmosphere such as nitrogen, helium, or argon. Among them, a nitrogen atmosphere is particularly preferable from the viewpoint of economy and ease of handling. The reduced pressure condition means that the pressure in the system in which the reaction is performed is lower than the atmospheric pressure, and the upper limit of the pressure is preferably 50 kPa or less, more preferably 20 kPa or less, still more preferably 10 kPa or less. By setting the upper limit of the pressure within such a range, undesirable side reactions such as a crosslinking reaction tend to be suppressed. The lower limit of the pressure may be 0.1 kPa or more. By setting the lower limit of the pressure to 0.1 kPa or more, it is possible to avoid a load on the reactor due to excessive pressure reduction.

### [Step 2]

The production method of the present invention includes a step of melt-kneading a polyarylene sulfide copolymer and a water-soluble thermoplastic resin in step 1, and removing the water-soluble thermoplastic resin by washing the resulting mixture with a solvent in which the resin is soluble. Then, the remaining polyarylene sulfide copolymer particles are collected.

The polyarylene sulfide copolymer can be washed by a known method. As a washing method for removing adhering substances and inclusions on the polyarylene sulfide copolymer particles, reslurry washing or the like can be used, and heating may be appropriately performed.

The solvent used in the washing is not limited as long as it is a solvent that does not dissolve the polyarylene sulfide copolymer particles and dissolves the water-soluble thermoplastic resin, but alcohols such as methanol, ethanol, and isopropanol and water are preferable, and water is most preferable. In particular, washing with water is preferable from the viewpoint that the exposure of the worker to the organic solvent in the particle-forming work can be minimized, and the environmental pollution due to the discharge of the organic solvent into the environment can be suppressed. In addition, washing with water is preferable in that the organic solvent serving as a plasticizer can be suppressed from remaining in the polyarylene sulfide copolymer particles, and deterioration of mechanical properties when used as a raw material of a three-dimensional object or a fiber-reinforced composite base material can be suppressed.

After the washing step, the polyarylene sulfide copolymer particles are isolated and dried. Examples of the isolation method include filtration, centrifugation, centrifugation filtration, heat drying, spray drying, and decantation. The drying is preferably performed at a temperature equal to or lower than the melting point of the polyarylene sulfide copolymer particles, and the pressure may be reduced. As the drying methods, air drying, hot air drying, heat drying, reduced pressure drying, freeze drying, or the like are selected.

### [Resin composition containing polyarylene sulfide copolymer particles]

The polyarylene sulfide copolymer particles can also be used as a resin composition by blending components selected from, for example, a crystal nucleating agent, various fillers, additives, and the like as other optional components. In the polyarylene sulfide copolymer particles of the present invention, when a component selected from a filler and other additives is blended, a homogeneous resin composition is more efficiently obtained than when conventional polyarylene sulfide copolymer particles are used. In particular, in blending with a fibrous inorganic filler, the polyarylene sulfide copolymer particles are more homogeneously blended. By molding a resin composition containing such polyarylene sulfide copolymer particles of the present invention, a molded article excellent in mechanical properties can be obtained.

Examples of the crystal nucleating agent include talc, kaolin, an organic phosphorus compound, and polyether ether ketone. Examples of the filler include an inorganic filler and an organic filler. The type of the filler is not limited, but a fibrous inorganic filler such as glass fiber or carbon fiber is preferable in consideration of the reinforcing effect by the filler as the resin composition. Carbon fiber has not only an effect of improving mechanical properties but also an effect of reducing the weight of a molded article. When the filler is carbon fiber, the effect of improving the mechanical properties and chemical resistance of the resin composition is more greatly exhibited, which is preferable. As the additive, an antioxidant, a mold release agent, a lubricant, an ultraviolet absorber, a colorant, a foaming agent, and the like can be used.

### [Use of polyarylene sulfide copolymer particles]

The polyarylene sulfide copolymer particles of the present invention having high heat resistance, high sphericity, and a specific median particle diameter D50 can be used for injection molding, injection compression molding, blow molding, extrusion molding, and the like, similarly to the polyarylene sulfide copolymer. In addition, it can also be used as a heat resistant additive in the field of adhesive materials, the field of paints, and the field of polymer compounds, and as a raw material for a three-dimensional object formed by a powder bed fusion method. The three-dimensional object has excellent chemical resistance, high heat resistance, and excellent mechanical properties derived from the properties of the polyarylene sulfide copolymer. Further, since the polyarylene sulfide copolymer particles of the present invention having high sphericity have high fluidity, a three-dimensional object formed from the polyarylene sulfide copolymer particles has a homogeneous and sufficient fabricated object density, and is also excellent in surface quality.

A fiber-reinforced composite base material can also be obtained by the step of dispersing the polyarylene sulfide copolymer particles in the reinforcing fiber and the step of melting the polyarylene sulfide copolymer particles and impregnating the reinforcing fiber with the molten polyarylene sulfide copolymer particles. The polyarylene sulfide copolymer particles are dispersed in gaps between reinforcing fibers, and then the polyarylene sulfide copolymer particles are melted, followed by pressurization to impregnate the reinforcing fibers with the polyarylene sulfide copolymer. The reinforcing fibers may be continuous fibers or discontinuous fibers. By using the polyarylene sulfide copolymer particles, the polyarylene sulfide copolymer can be efficiently and more homogeneously dispersed in gaps between reinforcing fibers. In the dispersion, the polyarylene sulfide copolymer particles can be directly dispersed in the reinforcing fiber, or can be dispersed using a dispersion described later. The polyarylene sulfide copolymer particles having high heat resistance and high sphericity of the present invention exhibit homogeneous mechanical properties due to excellent particle dispersibility. Such a fiber-reinforced composite base material is suitable for producing a molded article having high heat resistance.

The polyarylene sulfide copolymer particles of the present invention can also be used as a dispersion in which the polyarylene sulfide copolymer particles are dispersed in a liquid serving as a medium. Such a dispersion can be suitably used, for example, when a fiber-reinforced composite base material is produced from polyarylene sulfide copolymer particles. After the dispersion is dispersed in the reinforcing fiber and the medium is removed by evaporation, the polyarylene sulfide copolymer particles can be melted and impregnated into the reinforcing fiber.

The liquid used as the medium of the dispersion is preferably water or an organic solvent. Specific examples of the organic solvent include alcohol compounds such as methanol, ethanol, 1-propanol, and 2-propanol; N-alkylpyrrolidones such as N-methyl-2-pyrrolidone, N-ethyl-2-pyrrolidone, and N-cyclohexyl-2-pyrrolidone; caprolactams such as N-methyl-ε-caprolactam; aprotic organic solvent such as 1,3-dimethyl-2-imidazolidinone, N,N-dimethylacetamide, N,N-dimethylformamide, and hexamethylphosphoric acid triamide; aromatic hydrocarbon compounds such as benzene, toluene, o-xylene, m-xylene, and p-xylene; ketone compounds such as 2-butanone, 3-pentanone, and 4-methyl-2-pentanone; saturated aliphatic hydrocarbon compounds such as cyclopentane, pentane, isopentane, neopentane, methylcyclopentane, cyclohexane, n-hexane, 2-methylpentane, 3-methylpentane, 2,2-dimethylbutane, 2,3-dimethylbutane, methylcyclohexane, heptane, 2-methylhexane, 3-methylhexane, 2,3-dimethylpentane, 2,4-dimethylpentane, and ethylcyclohexane; and mixtures thereof. The liquid used as the medium is most preferably water. As a method of stabilizing the dispersion, a method of stabilizing the dispersion by entropy, ion repulsive force, or steric repulsive force using a dispersant can also be generally used.

The three-dimensional object formed from the polyarylene sulfide copolymer particles of the present invention, the molded article formed from the resin composition containing the polyarylene sulfide copolymer particles of the present invention, and the molded article formed from the fiber-reinforced composite base material of the present invention are excellent in heat resistance, chemical resistance, flame retardancy, electrical properties, and mechanical properties, and examples of the use thereof include electrical and electronic parts, audio equipment parts, household and office electrical equipment parts, machine-related parts, optical equipment, precision machine-related parts, plumbing parts, automobile-vehicle-related parts, aerospace-related parts such as aircraft structural members and aircraft interior materials, and various other applications.

### EXAMPLES

Hereinafter, the method of the present invention will be described more specifically with reference to Examples and Comparative Examples, but the present invention is not limited only to these Examples.

### [Analysis of functional group content]

The amount of the amino group contained in the polyarylene sulfide (A) was determined by measuring an amorphous film produced by rapidly cooling the polyarylene sulfide from a molten state by heating at 320°C using FT-IR (IR-810 type infrared spectrophotometer manufactured by JASCO Corporation), and calculated based on the absorption intensity at 3382 cm⁻¹ derived from the amino group with respect to the absorption intensity at 1901 cm⁻¹ derived from the benzene ring of the arylene sulfide unit.

### [Molecular weight measurement]

The weight average molecular weight Mw and the number average molecular weight Mn were measured using gel permeation chromatography (GPC), which is a type of size exclusion chromatography (SEC), and calculated in terms of polystyrene. GPC measurement conditions are shown below.
Apparatus: Senshu Scientific Co., Ltd. SSC-7110
Column name: Shodex UT806M×2
Eluent: 1-Chloronaphthalene
Detector: Differential refractive index detector
Column temperature: 210°C
Pre-column oven temperature: 250°C
Pump oven temperature: 50°C
Temperature of detector: 210°C
Flow rate: 1.0 mL/min
Specimen injection amount: 300 µL.

### [Measurement of complex melt viscosity]

The measurement of the complex melt viscosity of the polyarylene sulfide copolymer before the heat treatment, the measurement of the complex melt viscosity after the heat treatment, and the measurement of the loss modulus and the storage modulus for calculating the loss tangent were performed under the following conditions using a rheometer.
Apparatus: Physica MCR501 from Anton Paar
Plate: Parallel (φ25 mm)
Gap: 1.0 mm
Angular frequency (ω): 6.28 rad/s
Specimen charge weight: About 0.7 g
Atmosphere: Under a nitrogen flow at normal pressure
Measurement temperature: 300°C.

### [Measurement of glass transition temperature, melting point and crystallization temperature]

The glass transition temperature (Tg), the melting point (Tm) and the crystallization temperature (Tmc) were measured by a differential scanning calorimeter (DSC) using about 10 mg of an amorphous film prepared by rapidly cooling polyarylene sulfide copolymer particles or polyarylene sulfide copolymer pellets from a molten state. The inflection point of the baseline shift detected when the temperature was raised from 0°C to 340°C at a rate of 20°C/min was defined as a glass transition temperature. The crystallization temperature was defined as a value of a crystallization peak temperature detected when the temperature was raised from 0°C to 340°C at a rate of 20°C/min, then held at 340°C for 1 minute, and lowered to 100°C at a rate of 20°C/min. The melting point was defined as a value of a melting peak temperature detected when the temperature was raised from 0°C to 340°C at a rate of 20°C/min, then held at 340°C for 1 minute, lowered to 100°C at a rate of 20°C/min, then held at 100°C for 1 minute, and raised again to 340°C at a rate of 20°C/min.
Apparatus: TA Instruments TA-Q200
Carrier gas: Nitrogen
Sample purge flow rate: 50 mL/minute.

### [Particle diameter and particle size distribution in aqueous dispersion]

About 100 mg of polyarylene sulfide copolymer particles or polyarylene sulfide particles was added in advance to about 5 mL of deionized water, and Triton X-100 was added dropwise until the particles became dispersible to prepare a dispersion. The dispersion was added to a laser diffraction type particle diameter distribution meter measuring apparatus (Microtrac MT3300EX II) manufactured by Nikkiso Co., Ltd. until the concentration became measurable, and ultrasonic dispersion was performed at 30 W for 60 seconds in the measuring apparatus, and then the particle size distribution was measured for a measurement time of 10 seconds.

### [Sphericity]

The sphericity of the polyarylene sulfide copolymer particles or the polyarylene sulfide particles was calculated according to the following mathematical formula from the major axis diameter and minor axis diameter of 30 particles randomly observed from a photograph taken with a digital microscope (VHX-7000) manufactured by KEYENCE CORPORATION. The major axis diameter is a diameter at which an interval between parallel lines when an image of a particle is sandwiched between two parallel lines is the largest, and the minor axis diameter is a diameter at which an interval between parallel lines when the image is sandwiched between two parallel lines in a direction orthogonal to the major axis diameter is the smallest. [Mathematical Formula 2] $S = \frac{{\sum }_{i = 1}^{n} \left({b}_{i}/{a}_{i}\right)}{n} \times 100$

In the mathematical formula, S is the sphericity, n is the number of measurements, aᵢ is the major axis diameter of the i-th particle, and bᵢ is the minor axis diameter of the i-th particle. The number of measurements n is 30.

### [Reference Example 1]

To an autoclave with a stirrer and a bottom stop valve, 9.5 kg (81.9 mol) of 48.4% sodium hydrogen sulfide, 3.84 kg (93.1 mol) of 97% sodium hydroxide, 13.4 kg (135 mol) of N-methyl-2-pyrrolidone (NMP), and 9.82 kg of ion-exchanged water were charged, and gradually heated to 225°C over about 3 hours while nitrogen was passed at normal pressure. When the temperature reached 225°C, heating was finished, and cooling was started.

Thereafter, the reaction vessel was cooled to 200°C, 12.6 kg (85.9 mol) of p-dichlorobenzene (p-DCB), 1.07 kg (8.23 mol) of 4-aminothiophenol (4-ATP), and 19.8 kg (200 mol) of NMP were added thereto, the reaction vessel was then sealed under nitrogen gas, the temperature was raised to 260°C at a rate of 0.6°C/min with stirring, and the mixture was reacted at 260°C for 120 minutes.

After completion of the reaction, the autoclave bottom stop valve was immediately opened, and the contents were flashed into an apparatus with a stirrer, and dried and solidified in an apparatus with a stirrer at 230°C for 1.5 hours to recover a solid including PPS and salts.

The obtained solid and ion-exchanged water were placed in an autoclave with a stirrer, a washing step was performed at 75°C for 15 minutes, and then the mixture was filtered through a filter. This operation was performed three times to obtain a cake. The obtained cake and 30 liters of ion-exchanged water were placed in an autoclave with a stirrer, the inside of the autoclave was replaced with nitrogen, and then the temperature was raised to 195°C. Thereafter, the autoclave was cooled, and the contents were filtered through a filter to obtain a cake. The obtained cake was dried at 120°C under nitrogen flow.

To a vessel with a stirrer, 3 kg of the dried cake and 30 kg of N-methyl-2-pyrrolidone (NMP) were charged, and after stirring for 30 minutes, the mixture was filtered through a filter to obtain a cake. A cycle of washing the obtained cake with 30 liters of ion-exchanged water for 15 minutes and filtering it was repeated three times, and then the cake was dried at 120°C for 4 hours under a nitrogen flow to obtain dry PPS. The amino group amount of the obtained PPS was 510 µmol/g, and the number average molecular weight was 3,200.

### [Reference Example 2]

The PPS obtained in Reference Example 1 and pyromellitic anhydride were dry-blended so that the molar ratio of the amount of acid anhydride groups of the pyromellitic anhydride to the amount of amino groups of the PPS was 1.200; the mixture was then reacted by melt-kneading at a cylinder temperature of 300°C and a screw rotation speed of 200 rpm using a TEX30α type twin-screw extruder (L/D is about 45, 3 kneading sections) manufactured by The Japan Steel Works, Ltd. equipped with a vacuum vent to obtain a PPS copolymer.

From the FT-IR spectrum, it was confirmed that the obtained PPS copolymer contained a phenylene sulfide unit as a structural unit, and an imide group was introduced. As a result of DSC measurement, the glass transition temperature of the PPS copolymer was 114°C, the crystallization temperature was 171°C, and the melting point was 263°C. The result of GPC measurement showed that the Mw was 46,700. The result of complex melt viscosity measurement was 240 Pa·s. The PPS copolymer was in the form of pellets. The results were summarized in Table 1.

### [Reference Example 3]

A PPS copolymer was obtained in the same manner as in Reference Example 2 except that dry blending was performed such that the molar ratio of the amount of acid anhydride possessed by pyromellitic anhydride/the amount of amino groups possessed by PPS was 1.213.

From the FT-IR spectrum, it was confirmed that the obtained PPS copolymer contained a phenylene sulfide unit as a structural unit, and an imide group was introduced. As a result of DSC measurement, the glass transition temperature of the PPS copolymer was 114°C, the crystallization temperature was 205°C, and the melting point was 262°C. The result of GPC measurement showed that the Mw was 48,600. The result of complex melt viscosity measurement was 176 Pa·s. The PPS copolymer was in the form of pellets. The results were summarized in Table 1.

### [Example 1]

Into a small melt kneader Haake MiniLabII equipped with a circulation mechanism, 4.0 g of the PPS copolymer obtained in Reference Example 2 and 6.0 g of PEG 20000 (manufactured by Tokyo Chemical Industry Co., Ltd.) (complex melt viscosity: 0.80 Pa·s) were charged, and melt-kneaded at a cylinder temperature of 300°C and a screw rotation speed of 200 rpm for 3 minutes, then discharged into a tray filled with ion-exchanged water. At this time, the complex melt viscosity ratio (ηa/ηb) of the melt viscosity (ηa) of the PPS copolymer to the melt viscosity (ηb) of PEG 20000 was 301. A washing step of performing suction filtration using filter paper as a filter material, reslurrying the obtained cake with ion-exchanged water, and performing suction filtration using filter paper was repeated three times to obtain polyarylene sulfide copolymer particles. The polyarylene sulfide copolymer particles had a glass transition temperature of 110°C and a melting point of 259°C. The Mw was 53,000, and the Mw retention rate of the PPS copolymer particles relative to the Mw of the PPS copolymer of Reference Example 2 was 113%. The polyarylene sulfide copolymer particles had a D50 of 80.6 µm and a D90/D10 of 1.7. The sphericity was 93. The results were summarized in Table 1.

### [Example 2]

PPS copolymer particles were obtained in the same manner as in Example 1 except that PEG 500000 (manufactured by FUJIFILM Wako Pure Chemical Corporation) (complex melt viscosity: 7.9 Pa·s) was used instead of PEG 20000. At this time, the complex melt viscosity ratio (ηa/ηb) of the melt viscosity (ηa) of the PPS copolymer to the melt viscosity (ηb) of PEG 500000 was 30. The polyarylene sulfide copolymer particles had a glass transition temperature of 110°C and a melting point of 261°C. The Mw was 51,800, and the Mw retention rate of the PPS copolymer particles relative to the Mw of the PPS copolymer of Reference Example 2 was 111%. The polyarylene sulfide copolymer particles had a D50 of 5.9 µm and a D90/D10 of 2.1. The sphericity was 93. The results were summarized in Table 1.

### [Example 3]

PPS copolymer particles were obtained in the same manner as in Example 2 except that the PPS copolymer of Reference Example 3 was used instead of the PPS copolymer of Reference Example 2. At this time, the complex melt viscosity ratio (ηa/ηb) of the melt viscosity (ηa) of the PPS copolymer to the melt viscosity (ηb) of PEG 500000 was 22. The polyarylene sulfide copolymer particles had a glass transition temperature of 110°C and a melting point of 261°C. The Mw was 46,200, and the Mw retention rate of the PPS copolymer particles relative to the Mw of the PPS copolymer of Reference Example 3 was 95%. The polyarylene sulfide copolymer particles had a D50 of 4.4 µm and a D90/D10 of 2.0. The sphericity was 89. The results were summarized in Table 1.

### [Comparative Example 1]

In liquid nitrogen, 1.5 g of the PPS copolymer obtained in Reference Example 2 was freeze-pulverized for 23 minutes. The polyarylene sulfide copolymer particles had a D50 of 198 µm and a D90/D10 of 12.7. The sphericity was 64%. The results were summarized in Table 2.

### [Comparative Example 2]

Into a 20 mL pressure-resistant vessel, 0.3 g of the PPS copolymer obtained in Reference Example 2 and 4.5 g of NMP to which 1000 ppm of water had been added were put, and after the air inside the vessel was replaced with nitrogen, the vessel was sealed. After heating at 250°C for 20 minutes with stirring at 240 rpm, the vessel was allowed to cool. After cooling to around room temperature over about 30 minutes while maintaining stirring, the mixed liquid was taken out from the pressure-resistant vessel, and to the mixed liquid, 20 mL of water was added, and then the mixture was stirred and filtered. Stirring and filtration in water were repeated to remove the solvent, followed by vacuum drying at 100°C to obtain polyarylene sulfide copolymer particles. The polyarylene sulfide copolymer particles had a glass transition temperature of 110°C, a crystallization temperature of 214°C, and a melting point of 261°C. The Mw was 25,300, and the Mw retention rate of the PPS copolymer particles relative to the Mw of the PPS copolymer of Reference Example 2 was 37%. The polyarylene sulfide copolymer particles in the methanol dispersion had a D50 of 15.9 µm and a D90/D10 of 5.5. The sphericity was 76%. The results were summarized in Table 2.

### [Reference Example 4]

To a 70 liter autoclave equipped with a stirrer, 8.27 kg (70.00 mol) of 47.5% sodium hydrogen sulfide, 2.96 kg (70.97 mol) of 96% sodium hydroxide, 11.43 kg (115.50 mol) of N-methyl-2-pyrrolidone (NMP), 2.58 kg (31.50 mol) of sodium acetate, and 10.5 kg of ion-exchanged water were charged, and the autoclave was gradually heated to 245°C over about 3 hours while nitrogen was passed at normal pressure. After distilling out 14.78 kg of water and 0.28 kg of NMP, the reaction vessel was cooled to 160°C.

Next, p-dichlorobenzene (10.24 kg, 69.63 mol) and NMP (9.01 kg, 91.00 mol) were added, and then the reaction vessel was sealed under nitrogen gas and heated to 238°C at a rate of 0.6°C/min with stirring. After performing the reaction at 238°C for 95 minutes, the reaction vessel was heated to 270°C at a rate of 0.8°C/min. After performing the reaction at 270°C for 100 minutes, the reaction vessel was cooled to 250°C at a rate of 1.3°C/min, while injecting 1.26 kg (70 moles) of water over 15 minutes. Thereafter, the reaction vessel was cooled to 200°C at a rate of 1.0°C/min, followed by rapid cooling to near room temperature.

The contents were taken out from the reaction vessel, diluted with 26.30 kg of NMP, then the solvent and the solid were filtered off through a sieve (80mesh), and the obtained particles were washed with 31.90 kg of NMP and then filtered off. The obtained material was washed and filtered several times with 56.00 kg of ion-exchanged water, and then washed and filtered with 70.00 kg of a 0.05 wt% acetic acid aqueous solution. Further, after the obtained material was washed and filtered with 70.00 kg of ion-exchanged water, the obtained hydrous PPS particles were dried with hot air at 80°C and dried under reduced pressure at 120°C. The glass transition temperature of the PPS particles was 94°C, the crystallization temperature was 219°C, and the melting point was 278°C. The Mw thereof was 75,100. The results were summarized in Table 2.

### [Comparative Example 3]

PPS particles were obtained under the same conditions as in Comparative Example 2 except that the PPS obtained in Reference Example 4 was used in place of the PPS copolymer obtained in Reference Example 2. The glass transition temperature of the PPS particles was 94°C, the crystallization temperature was 220°C, and the melting point was 278°C. The Mw was 73,300, and the Mw retention rate of the PPS particles relative to the Mw of the PPS of Reference Example 3 was 98%. The D50 of the PPS particles was 57.4 µm, and the D90/D10 was 2.6. The sphericity was 73%. The results were summarized in Table 2. The results were summarized in Table 2.

### [Reference Example 5]

Melting kneading was performed in the same manner as in Example 1 except that polyvinylpyrrolidone (K-30) (manufactured by FUJIFILM Wako Pure Chemical Corporation) was used in place of PEG 20000, but the obtained mixture did not dissolve in ion-exchanged water, and particles were not obtained. At this time, the complex melt viscosity ratio (ηa/ηb) was 0.06. The results were summarized in Table 2.

### [Reference Example 6]

Melting kneading was performed in the same manner as in Example 1 except that polyvinyl alcohol Mowiflex C-17 (manufactured by KURARAY CO., LTD.) was used instead of PEG 20000, but the process was interrupted because a large amount of decomposition gas was generated, and particles were not obtained. At this time, the complex melt viscosity ratio (ηa/ηb) was 0.006. The results were summarized in Table 2.

### [Comparative Example 4]

PPS particles were obtained under the same conditions as in Example 1 except that the PPS obtained in Reference Example 4 was used in place of the PPS copolymer obtained in Reference Example 2. At this time, the complex melt viscosity ratio (ηa/ηb) of the melt viscosity (ηa) of PPS to the melt viscosity (ηb) of PEG 20000 was 297. The glass transition temperature of the PPS particles was 94°C, the crystallization temperature was 220°C, and the melting point was 278°C. The Mw was 66,000, and the Mw retention rate of the PPS particles relative to the Mw of the PPS of Reference Example 4 was 88%. The D50 of the PPS particles was 303 µm, and the D90/D10 was 6.4. The sphericity was 86%. The results were summarized in Table 2.

### [Table 1]

**[Table 1]**

| | | | Reference Example 2 | Reference Example 3 | Example 1 | Example 2 | Example 3 |
|---|---|---|---|---|---|---|---|
| Fine particle formation conditions | Polymer | - | PPS copolymer | PPS copolymer | PPS copolymer | PPS copolymer | PPS copolymer |
| | Fine particle formation method | - | - | - | Melt-kneading | Melt-kneading | Melt-kneading |
| | Medium | - | - | - | PEG20000 | PEG500000 | PEG500000 |
| | Complex melt viscosity ratio | - | - | - | 301 | 30 | 22 |
| DSC | Tg | °C | 114 | 114 | 110 | 110 | 110 |
| | Tmc | °C | 171 | 205 | 199 | 207 | 205 |
| | Tm | °C | 263 | 262 | 259 | 261 | 261 |
| GPC | Mw | - | 46,700 | 48, 600 | 53, 000 | 51, 800 | 46,200 |
| Particle size distribution measurement (aqueous dispersion) | D50 | µm | - | - | 80.6 | 5.9 | 4.4 |
| | D90/D10 | - | - | - | 1.7 | 2.1 | 2.0 |
| Optical microscope observation | Sphericity | % | - | - | 93 | 93 | 89 |

### [Table 2]

**[Table 2]**

| | | | Comparative Example 1 | Comparative Example 2 | Reference Example 4 | Comparative Example 3 | Reference Example 5 | Reference Example 6 | Comparative Example 4 |
|---|---|---|---|---|---|---|---|---|---|
| Fine particle formation conditions | Polymer | - | PPS copolymer | PPS copolymer | PPS | PPS | PPS copolymer | PPS copolymer | PPS |
| | Fine particle formation method | - | Freeze-pulverization | Dissolution and precipitation | - | Dissolution and precipitation | Melt-kneading | Melt-kneading | Melt-kneading |
| | Medium | - | - | NMP | - | NMP | PVP | PVA | PEG500000 |
| | Complex melt viscosity ratio | - | - | - | - | - | 0.06 | 0.006 | 297 |
| DSC | Tg | °C | - | 110 | 94 | 94 | - | - | 94 |
| | Tmc | °C | - | 214 | 219 | 220 | - | - | 220 |
| | Tm | °C | - | 261 | 278 | 278 | - | - | 278 |
| GPC | Mw | - | - | 25, 300 | 75,100 | 73,300 | - | - | 66,000 |
| Particle size distribution measurement (aqueous dispersion) | D50 | µm | 198 | 15.9 | - | 57.4 | - | - | 303.0 |
| | D90/D10 | - | 12.7 | 5.5 | - | 2.6 | - | - | 6.4 |
| Optical microscope observation | Sphericity | % | 64 | 76 | - | 73 | - | - | 86 |

From Examples 1 to 3, it was found that according to the method of the present invention, polyarylene sulfide copolymer particles having high heat resistance and high sphericity can be obtained.

As shown in Comparative Example 1, when the pellet-shaped PPS copolymer was freeze-pulverized, the sphericity was smaller than that of the PPS copolymer particles obtained in Examples 1 to 3. In addition, both the D50 particle diameter and the D90/D10 were large.

From Comparative Examples 2 and 3, it was found that particles obtained by dissolving and precipitating a PPS copolymer or PPS in a solvent have low sphericity, and PPS has low Tg and is poor in heat resistance.

## Claims

1. Polyarylene sulfide copolymer particles, wherein a median particle diameter D50 is 1 µm or more and 1,000 µm or less, wherein a glass transition temperature is 95°C or more and 190°C or less when measured using a differential scanning calorimeter, and wherein a sphericity is 80 or more and 100 or less.

2. The polyarylene sulfide copolymer particles according to claim 1, wherein the median particle diameter D50 is 1 µm or more and 150 µm or less.

3. The polyarylene sulfide copolymer particles according to claim 1, wherein a weight average molecular weight Mw is 30,000 or more.

4. The polyarylene sulfide copolymer particles according to claim 1, wherein the polyarylene sulfide copolymer constituting the polyarylene sulfide copolymer particles contains at least one linking group selected from a sulfonyl group, a sulfinyl group, an ester group, an amide group, an imide group, an ether group, a urea group, a urethane group, and a siloxane group.

5. A method for producing polyarylene sulfide copolymer particles, the method comprising: step 1 of melt-kneading a polyarylene sulfide copolymer and a water-soluble thermoplastic resin, wherein the polyarylene sulfide copolymer has a glass transition temperature of 95°C or more and 190°C or less when measured using a differential scanning calorimeter; and step 2 of removing the water-soluble thermoplastic resin by washing with water or alcohols.

6. The method for producing polyarylene sulfide copolymer particles according to claim 5, wherein a viscosity ratio ηa/ηb of a melt viscosity (ηa) of the polyarylene sulfide copolymer to a melt viscosity (ηb) of the water-soluble thermoplastic resin is 0.1 or more and 1000 or less.

7. A dispersion in which the polyarylene sulfide copolymer particles according to claim 1 are dispersed in a liquid.

8. A three-dimensional object formed from the polyarylene sulfide copolymer particles according to claim 1.

9. A method for producing a fiber-reinforced composite base material, comprising: a step of dispersing the polyarylene sulfide copolymer particles according to claim 1 in a reinforcing fiber; and a step of melting the polyarylene sulfide copolymer particles to impregnate the reinforcing fiber.

10. A fiber-reinforced composite base material produced by the method for producing a fiber-reinforced composite base material according to claim 9.

11. A molded article formed from the fiber-reinforced composite base material according to claim 10.

12. The molded article according to claim 11, wherein the molded article is an aircraft structural member.
